# EUROPEAN PATENT APPLICATION

(11) **EP 4 797 187 A1**
(43) Date of publication of application: **26.08.2026**
(21) Application number: 26159755.3
(22) Date of filing: 20.02.2026
(51) Int. Cl.: G06Q 30/0601, G06Q 50/04

(54) **PROVIDING APPARATUS, PROVIDING METHOD, AND PROVIDING PROGRAM**

(30) Priority: 25.02.2025 JP 2025028102
(71) Applicant: Yokogawa Electric Corporation, Musashino-shi, Tokyo 180-8750 (JP)
(72) Inventor: FUJISAKI, Morihiro, Musashino-shi, Tokyo, 180-8750 (JP); KOYAMA, Etsutaro, Musashino-shi, Tokyo, 180-8750 (JP); SATOU, Yuusuke, Musashino-shi, Tokyo, 180-8750 (JP); TAKAMURA, Satoshi, Musashino-shi, Tokyo, 180-8750 (JP)
(74) Representative: Winter, Brandl - Partnerschaft mbB

(57) **Abstract**

A providing server (10) stores therein product information indicating each of specification items indicating each of products, acquires request information indicating each of specification items of a product requested by a customer, extracts candidate products to be proposed to the customer from all of the products included in the product information based on the acquired request information, calculates a conformity degree with the request information for each of the extracted candidate products, and provides proposal information indicating the candidate products based on the calculated conformity degree.

## Description

### FIELD

The present disclosure is related to a providing apparatus, a providing method, and a providing program.

### BACKGROUND

In a vendor company (appropriately referred to as a "product vendor") that provides a product, such as a field device, for a plant, a sales representative examines products that meet a request from a user (appropriately referred to as a "customer") and proposes a product to be provided to the user. In this case, the sales representative compares data sheets of product specifications and proposes a product that seems to be optimal for the user based further on past transaction records (see, for example, Japanese Laid-open Patent Publication No. 2018-014056).

However, it is difficult to optimize a proposal for the product to be provided to the user. For example, in some cases, it takes a long time to propose a product after receiving a request from the user. Further, to propose a product that meets the request from the user, the sales representative needs experience and knowledge.

The present disclosure has been conceived in view of the foregoing situation, and an object of the present disclosure is to optimize a proposal for a product to be provided to a user.

### SUMMARY OF THE INVENTION

According to an aspect of the embodiments, a providing apparatus includes a memory, and a processor that is connected to the memory, wherein the memory stores therein product information indicating each of specification items of each of products, and the processor acquires request information indicating each of specification items of a product requested by a user, extracts candidate products to be proposed to the user from among all of the products included in the product information based on the acquired request information, calculates a conformity degree with the request information for each of the extracted candidate products, and provides proposal information indicating the candidate products based on the calculated conformity degree.

According to an aspect of the embodiments, a providing method implemented by a computer, the providing method includes acquiring request information indicating each of specification items of a product requested by a user, extracting candidate products to be proposed to the user from among all of the products included in product information indicating each of specification items of each of products, based on the acquired request information, calculating a conformity degree with the request information for each of the extracted candidate products, and providing proposal information indicating the candidate products based on the calculated conformity degree.

According to an aspect of the embodiments, a providing program that causes a management apparatus to execute a process, the process includes acquiring request information indicating each of specification items of a product requested by a user, extracting candidate products to be proposed to the user from among all of the products included in product information indicating each of specification items of each of products, based on the acquired request information, calculating a conformity degree with the request information for each of the extracted candidate products, and providing proposal information indicating the candidate products based on the calculated conformity degree.

### BRIEF DESCRIPTION OF THE DRAWINGS

FIG. 1 is a diagram illustrating a configuration example and a process example of an information providing system according to one embodiment;
FIG. 2 is a block diagram illustrating a configuration example of each of apparatuses in the information providing system according to one embodiment;
FIG. 3 is a diagram illustrating an example of a product information storage unit of a providing server according to one embodiment;
FIG. 4 is a diagram illustrating an example of a request information storage unit of the providing server according to one embodiment;
FIG. 5 is a diagram illustrating an example of a conversion information storage unit of the providing server according to one embodiment;
FIG. 6 is a diagram illustrating an example of a weight information storage unit of the providing server according to one embodiment;
FIG. 7 is a diagram illustrating an example of a proposal information storage unit of the providing server according to one embodiment;
FIG. 8 is a diagram illustrating a specific example of product information in the information providing system;
FIG. 9 is a diagram illustrating a specific example of request information in the information providing system;
FIG. 10 is a diagram illustrating a specific example of conversion information in the information providing system;
FIG. 11 is a diagram illustrating a specific example of weight information in the information providing system;
FIG. 12 is a diagram illustrating a specific example 1 of proposal information in the information providing system;
FIG. 13 is a diagram illustrating a specific example 2 of the proposal information in the information providing system;
FIG. 14 is a diagram illustrating a specific example 3 of the proposal information in the information providing system;
FIG. 15 is a diagram illustrating a specific example of a proposal information display screen in the information providing system;
FIG. 16 is a flowchart illustrating an example of the entire flow of the information providing system according to one embodiment;
FIG. 17 is a flowchart illustrating an example of the flow of an acquisition control process of the information providing system according to one embodiment;
FIG. 18 is a flowchart illustrating an example of the flow of an extraction control process of the information providing system according to one embodiment;
FIG. 19 is a flowchart illustrating an example of the flow of a calculation control process of the information providing system according to one embodiment;
FIG. 20 is a flowchart illustrating an example of the flow of a provision control process of the information providing system according to one embodiment;
FIG. 21 is a diagram illustrating a hardware configuration example according to one embodiment.

### DETAILED DESCRIPTION OF THE PREFERRED EMBODIMENTS

Embodiments of a providing apparatus, a providing method, and a providing program according to one embodiment of the present disclosure will be described in detail below with reference to the drawings. Meanwhile, the present disclosure is not limited by the embodiments described below.

A configuration and a process of an information providing system 100 according to one embodiment, a configuration and a process of each of apparatuses of the information providing system 100, a specific example of each of processes of the information providing system 100, a flow of each of the processes of the information providing system 100, and effects of one embodiment will be described below.

### 1. Configuration and process of information providing system 100

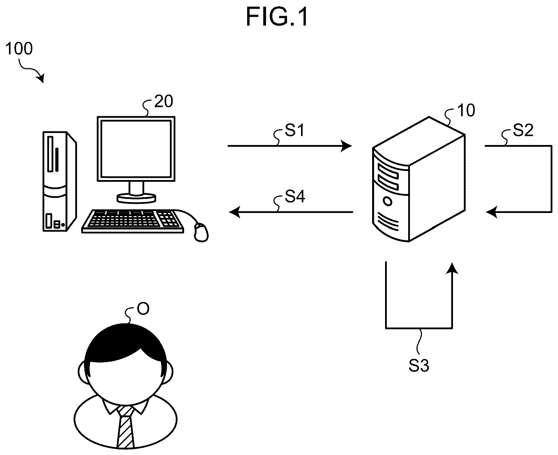

A configuration and a process of the information providing system 100 according to one embodiment will be described below with reference to FIG. 1. FIG. 1 is a diagram illustrating a configuration example and a process example of the information providing system 100 according to one embodiment. In the following, a configuration example of the information providing system 100, a process example of the information providing system 100, and effects of the information providing system 100 will be described.

### 1-1. Configuration example of entire information providing system 100

A configuration example of the entire information providing system 100 will be described. the information providing system 100 includes a providing server 10 and an operator terminal 20. Here, the providing server 10 and the operator terminal 20 are communicably connected to each other via a predetermined communication network (not illustrated) in a wired or wireless manner. Meanwhile, various kinds of communication networks, such as the Internet or a dedicated line, may be adopted as the predetermined communication network.

### 1-1-1. Providing server 10

The providing server 10 is a providing apparatus that provides proposal information on a field device in a plant. For example, the providing server 10 is implemented by a cloud environment, an on-premises environment, an edge environment, or the like. Furthermore, the providing server 10 may be implemented by a desktop Personal Computer (PC), a notebook PC, a tablet terminal, a smartphone, or the like. Meanwhile, the information providing system 100 illustrated in FIG. 1 may include the plurality of providing servers 10.

### 1-1-2. Operator terminal 20

The operator terminal 20 is a terminal that is used by an operator O who is a sales representative or the like of a product vendor. For example, the operator terminal 20 is installed in a sales office of the product vendor and operated by the operator O. Meanwhile, the information providing system 100 illustrated in FIG. 1 may include the plurality of operator terminals 20. Further, in the example illustrated in FIG. 1, a case is illustrated in which the operator terminal 20 is implemented by a desktop PC, but the operator terminal 20 may be implemented by a notebook PC, a smartphone, a server apparatus, a cloud system, or the like.

### 1-2. Process example of entire information providing system 100

A process example of the entire information providing system 100 will be described. Meanwhile, processes from Step S1 to Step S4 below may be performed in different order. Further, some of the processes from Step S1 to Step S4 below may be omitted.

### 1-2-1. Request information acquisition process

Firstly, the providing server 10 performs a request information acquisition process (Step S1). For example, the providing server 10 acquires, as request information, digital data of a request for quotation (REQ) that is generated by the customer C from the operator terminal 20.

Here, the request information is information indicating each of specification items of a product P requested by the customer C. For example, the request information includes a product type of a field device (for example: a pressure sensor, a temperature sensor, or a flow sensor) for which the customer C wants to place an order or consider purchase. Further, the request information includes, as a specification item (appropriately referred to as a "requested specification") that is requested by the customer C, a measurement condition (for example: a maximum measured value, a minimum measured value, or measurement accuracy), a data type (for example: a measured value, an enumeration type, or a string type), a usage environment (for example: a country, a region, a plant type, or a plant scale), a price, a durability, a compatibility, or the like. Furthermore, the request information includes identification information on a requested specification format that is a format of the request for quotation that is generated by the customer C.

### 1-2-2. Candidate product extraction process

Secondly, the providing server 10 performs a candidate product extraction process (Step S2). For example, the providing server 10 converts the acquired request information to product information and extracts candidates for the product P that conform to the specification item requested by the customer C. At this time, the providing server 10 has conversion information including product information that indicates each of the specification items (appropriately referred to as "product specifications") of each of the products P and identification information on each of the products P corresponding to each of the specification items of the product P, identifies the identification information (appropriately referred to as a "product ID") on each of the products P that conforms to the request information by using the conversion information, and extracts candidate products from among the products P indicated by the product information by using the identified identification information on each of the products P.

Here, the product information is classified by, for example, each product type of the field device, and includes identification information on each of the products P, each of the specification items, a manual, or the like. Further, for example, the conversion information is set for each of converted items as a conversion table, and includes identification information on each of the converted items, the identification information on each of the products P corresponding to each of the specification items, identification information on the requested specification format, the product type of the field device, a match condition (for example: exact match or partial match) for each of the specification items, or the like.

### 1-2-3. Conformity degree calculation process

Thirdly, the providing server 10 performs a conformity degree calculation process (Step S3). For example, the providing server 10 calculates a conformity degree with the request information for each of the extracted candidate products. At this time, the providing server 10 calculates, as the conformity degree of each of the candidate products, a degree of match between the requested specification of the customer C and the product specification of each of the candidate products. Further, the providing server 10 calculates, as the conformity degree of each of the candidate products, a weight of each of the candidate products by using weight information that indicates importance of the requested specification for each of the customers C. Furthermore, the providing server 10 may add, as the conformity degree of each of the candidate products, the calculated degree of match and the calculated weight. Moreover, the providing server 10 may calculate, as the conformity degree of each of the candidate products, a weighted degree of match that is weighted in accordance with the matched requested specification.

### 1-2-4. Proposal information providing process

Fourthly, the providing server 10 performs a proposal information providing process (Step S4). For example, the providing server 10 displays the extracted candidate products as a candidate product display screen on a display of the operator terminal 20 to provide proposal information to the operator O. At this time, the providing server 10 is able to display the candidate products in descending order of the conformity degree. Further, the providing server 10 is able to color characters or an area of the product specification that matches the requested specification of the customer C. Furthermore, the providing server 10 is able to change a size or a font of the characters of the product specification that matches the requested specification of the customer C. Moreover, the providing server 10 is able to hide a candidate product for which the conformity degree is smaller than a predetermined value.

Furthermore, the operator O is able to select the product P by operation on the candidate product display screen and gives a proposal to the customer C via the operator terminal 20. Moreover, the operator O is able to receive an order of the product P that is placed by the customer C via the operator terminal 20. At this time, the providing server 10 is able to acquire order information indicating the order of the product P from the customer C, and update the proposal information or the weight information.

### 1-3. Effects of information providing system 100

In the following, an overview and problems of an information providing system 100-P according to a reference technology will be first described, and thereafter, effects of the information providing system 100 according to one embodiment will be described.

### 1-3-1. Overview of information providing system 100-P

In the information providing system 100-P according to the reference technology, the operator O who is a sales representative examines the product P that conforms to the request from the customer C, and proposes the product P to be provided to the customer C. At this time, the operator O compares data sheets of the product specifications and proposes the product P that seems to be optimal for the customer C based on past transaction records. At this time, the operator O may propose the product P based on experience and knowledge.

### 1-3-2. Problems with information providing system 100-P

The information providing system 100-P according to the reference technology has problems as described below. Firstly, the information providing system 100-P needs a long time to propose the product P after receiving a request from the customer C. Secondly, in the information providing system 100-P, it is difficult to transfer, as know-how, experience and knowledge of the operator O due to staff shortage. Thirdly, in the information providing system 100-P, advanced knowledge and a lot of time are needed for operation of generating a group of candidates that do not partly match needs of the customer C and selecting specifications that may be accepted by the customer C from the group. Fourthly, in the information providing system 100-P, the operator O performs operation of generating a comparison table of specification items while watching a product specification document and narrowing down products that conform to requested conditions. In this case, the operator O may propose the product P corresponding to the request while consulting with a product specialist or the like, which needs advanced knowledge and a lot of time. Fifthly, in the information providing system 100-P, when the proposed product P does not conform to the request of the customer C, it is needed to perform a re-examination about whether a different product P is acceptable.

### 1-3-3. Overview of information providing system 100

The information providing system 100 according to one embodiment performs processes as described below. Firstly, the providing server 10 acquires the request information generated by the customer C from the operator terminal 20. Secondly, the providing server 10 converts the request information to the product information by using the conversion information, and extracts the candidate products that conform to the requested specification of the customer C. Thirdly, the providing server 10 calculates the conformity degree with the request information for each of the candidate products. Fourthly, the providing server 10 displays the candidate products as the candidate product display screen on the display of the operator terminal 20 to provide the proposal information.

### 1-3-4. Effects of information providing system 100

The information providing system 100 according to one embodiment achieves effects as described below. Firstly, the information providing system 100 is able to reduce a load on the operator O who is a sales representative. Secondly, the information providing system 100 is able to stably propose the conforming product P to the customer C regardless of experience and knowledge of the operator O. Thirdly, the information providing system 100 is able to propose the conforming product P to the customer C in a short time.

As described above, the information providing system 100 is able to optimize proposal of the product P to the customer C.

### 2. Configuration and process of each of apparatuses in information providing system 100

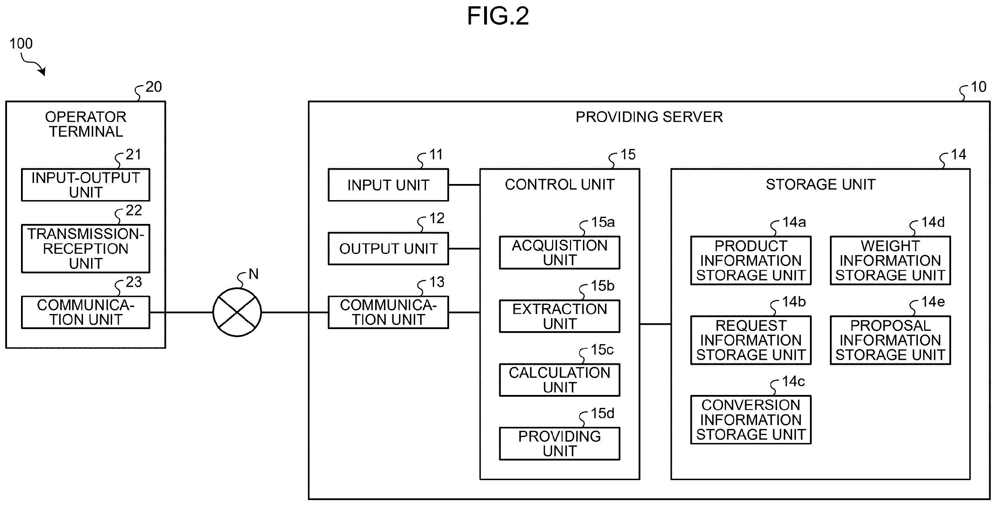

A configuration and a process of each of apparatuses that are included in the information providing system 100 illustrated in FIG. 1 will be described below with reference to FIG. 2 to FIG. 7. In the following, a configuration example of the entire information providing system 100 according to one embodiment, a configuration example and a process example of the providing server 10, and a configuration example and a process example of the operator terminal 20 will be described.

### 2-1. Configuration example of entire information providing system 100

A configuration example of the entire information providing system 100 illustrated in FIG. 1 will be described below with reference to FIG. 2. FIG. 2 is a block diagram illustrating a configuration example of each of the apparatuses of the information providing system 100 according to one embodiment. As illustrated in FIG. 2, the information providing system 100 includes the providing server 10 and the operator terminal 20. Further, the providing server 10 and the operator terminal 20 are communicably connected to each other via a communication network N that is implemented by the Internet, a dedicated line, or the like. Furthermore, the information providing system 100 may include a terminal of the customer C (not illustrated).

### 2-2. Configuration example and process example of providing server 10

A configuration example and a process example of the providing server 10 will be described with reference to FIG. 2. The providing server 10 includes an input unit 11, an output unit 12, a communication unit 13, a storage unit 14, and a control unit 15.

### 2-2-1. Input unit 11

The input unit 11 controls input of various kinds of information to the providing server 10. For example, the input unit 11 is implemented by a mouse, a keyboard, a touch panel, or the like, and receives input of various kinds of information to the providing server 10.

### 2-2-2. Output unit 12

The output unit 12 controls output of various kinds of information from the providing server 10. For example, the output unit 12 is implemented by a display, a speaker, or the like, and displays various kinds of information that are stored in the providing server 10.

### 2-2-3. Communication unit 13

The communication unit 13 controls communication with a different apparatus. For example, the communication unit 13 performs data communication with each of communication apparatuses via a router or the like. Further, the communication unit 13 is able to perform data communication with a terminal or the like (not illustrated).

### 2-2-4. Storage unit 14

The storage unit 14 stores therein various kinds of information that are referred to when the control unit 15 operates, and various kinds of information that are acquired when the control unit 15 operates. The storage unit 14 includes a product information storage unit 14a, a request information storage unit 14b, a conversion information storage unit 14c, a weight information storage unit 14d, and a proposal information storage unit 14e. Here, the storage unit 14 may be implemented by, for example, a semiconductor memory device such as a Random Access Memory (RAM) or a flash memory, or a storage device, such as a hard disk or an optical disk. Meanwhile, in the example illustrated in FIG. 2, the storage unit 14 is arranged inside the providing server 10, but may be arranged outside the providing server 10 or it may be possible to arrange a plurality of storage units.

### 2-2-4-1. Product information storage unit 14a

The product information storage unit 14a stores therein the product information. For example, the product information storage unit 14a stores therein the product information that is input via the input unit 11. Further, the product information storage unit 14a stores therein the product information that indicates each of the specification items of each of the products P. Furthermore, the product information storage unit 14a stores therein the product information that is classified for each product type. Here, the product P is, for example, a field device that is installed in a plant.

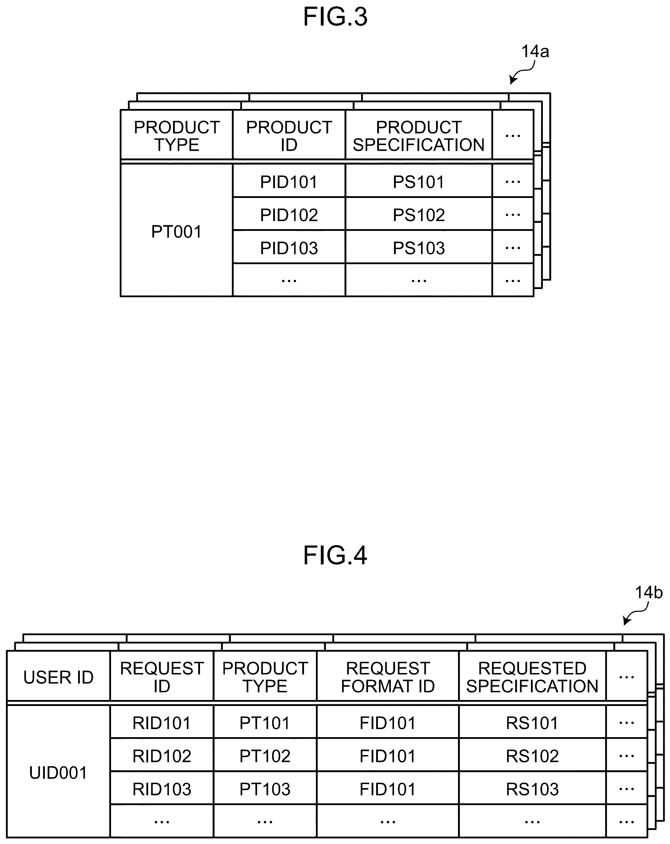

An example of data that is stored in the product information storage unit 14a will be described below with reference to FIG. 3. FIG. 3 is a diagram illustrating an example of the product information storage unit 14a of the providing server 10 according to one embodiment. In the example illustrated in FIG. 3, the product information storage unit 14a includes items such as a "product type", a "product ID", and a "product specification".

The "product type" indicates a type of the product P. For example, the "product type" is, as a name of a product type of a field device, a pressure sensor, a temperature sensor, a flow sensor, or the like. The "product ID" indicates identification information for identifying the product P. For example, the "product ID" is an identification number or an identification symbol of a product name, a product model name, a product model name code, or the like. The "product specification" indicates each of the specification items of each of the products P set by the product vendor. For example, the "product specification" is information on a measurement condition (for example: a maximum measured value, a minimum measured value, or measurement accuracy), a data type (for example: a measured value, an enumeration type, or a string type), a usage environment (for example: a country, a region, a plant type, or a plant scale), a price, a durability, a compatibility, or the like. Further, the "product specification" includes a product specification ID that is identification information corresponding to each of the specification items of each of the products P.

Specifically, FIG. 3 illustrates an example in which the product information storage unit 14a stores therein, with respect to a product type identified by "PT001", {product ID: "PID101", product specification: "PS101"}, {product ID: "PID102", product specification: "PS102"}, {product ID: "PID103", product specification: "PS103"}, ....

### 2-2-4-2. Request information storage unit 14b

The request information storage unit 14b stores therein the request information. For example, the request information storage unit 14b stores therein the request information that is acquired by an acquisition unit 15a of the control unit 15 (to be described later). Further, the request information storage unit 14b stores therein the request information indicating each of the specification items of the product P requested by the customer C who is a user.

An example of data that is stored in the request information storage unit 14b will be described below with reference to FIG. 4. FIG. 4 is a diagram illustrating an example of the request information storage unit 14b of the providing server 10 according to one embodiment. In the example illustrated in FIG. 4, the request information storage unit 14b includes items such as a "user ID", a "request ID", a "product type", a "request format ID", and "requested specification".

The "user ID" indicates identification information for identifying the customer C who is a user. For example, the "user ID" is an identification number or an identification symbol of a plant administrator who purchases a field device. The "request ID" is identification information for identifying the request information that is generated by the customer C. For example, the "request ID" is an identification number or an identification symbol of a request for quotation that is generated by the plant administrator who purchases a field device. The "product type" indicates a type of the product P. For example, the "product type" is, as a name of the product type of the field device, a pressure sensor, a temperature sensor, a flow sensor, or the like. The "request format ID" indicates identification information on each of different formats of the request information. For example, the "request format ID" is an identification number or an identification symbol of an application that is used by the customer C for generating the request for quotation, a worksheet for each product type, or the like. The "requested specification" indicates each of the specification items of each of the products P input by the customer C. For example, the "requested specification" is information on a measurement condition (for example: a maximum measured value, a minimum measured value, or measurement accuracy), a data type (for example: a measured value, an enumeration type, or a string type), a usage environment (for example: a country, a region, a plant type, or a plant scale), a price, a durability, a compatibility, or the like.

Specifically, FIG. 4 illustrates an example in which the request information storage unit 14b stores therein, with respect to a customer C identified by "UID001 ", {request ID: "RID101", product type: "PT101", request format ID: "FID101", requested specification: "RS101"}, {request ID: "RID102", product type: "PT102", request format ID: "FID101", requested specification: "RS102"}, {request ID: "RID103", product type: "PT103", request format ID: "FID101", requested specification: "RS103"}, ....

### 2-2-4-3. Conversion information storage unit 14c

The conversion information storage unit 14c stores therein the conversion information. For example, the conversion information storage unit 14c stores therein the conversion information that is input via the input unit 11. Further, the conversion information storage unit 14c stores therein the conversion information that includes product identification information on each of the products P corresponding to each of the specification items of the product P. Furthermore, the conversion information storage unit 14c stores therein the product identification information that includes at least one of the product ID, which is identification information on each of the products P corresponding to each of the specification items of the product P, and the product specification ID, which is identification information on each of the specification items of each of the products P. Moreover, the conversion information storage unit 14c stores therein the conversion information that includes a request format ID that is identification information on each of different formats of the request information.

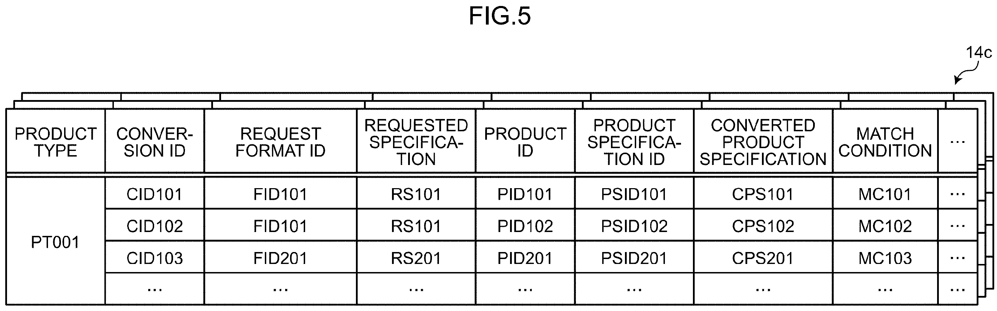

An example of data that is stored in the conversion information storage unit 14c will be described below with reference to FIG. 5. FIG. 5 is a diagram illustrating an example of the conversion information storage unit 14c of the providing server 10 according to one embodiment. In the example illustrated in FIG. 5, the conversion information storage unit 14c includes items such as a "product type", a "conversion ID", a "request format ID", "requested specification", a "product ID", a "product specification ID", a "converted product specification", and a "match condition".

The "product type" indicates a type of the product P. For example, the "product type" indicates, as a name of the product type of the field device, a pressure sensor, a temperature sensor, a flow sensor, or the like. The "conversion ID" indicates identification information for identifying a set converted item. For example, the "conversion ID" is an identification number or an identification symbol of the converted item, which is assigned in order of input by the operator O. The "request format ID" indicates identification information on each of different formats of the request information. For example, the "request format ID" is an identification number or an identification symbol of an application that is used by the customer C for generating the request for quotation, a worksheet for each product type, or the like. The "requested specification" indicates each of the specification items of each of the products P input by the customer C. For example, the "requested specification" is information on a measurement condition (for example: a maximum measured value, a minimum measured value, or measurement accuracy), a data type (for example: a measured value, an enumeration type, or a string type), a usage environment (for example: a country, a region, a plant type, or a plant scale), a price, a durability, a compatibility, or the like. The "product ID" indicates identification information for identifying the product P. For example, the "product ID" is an identification number or an identification symbol of a product name, a product model name, a product model name code, or the like. The "product specification ID" indicates identification information for identifying the specification item of the product P. For example, the "product specification ID" is an identification number or an identification symbol of the specification item corresponding to the set converted item among the specification items, such as a measurement condition, a data type, a usage environment, a price, a durability, and a compatibility, of the product P. The "converted product specification" indicates the specification item corresponding to the set converted item among the specification items of each of the products P set by the product vendor. For example, the "converted product specification" is information that is selected as the specification item corresponding to the set converted item from among the specification items, such as a measurement condition, a data type, a usage environment, a price, a durability, and a compatibility, of the product P. The "match condition" indicates a condition for determining whether or not the requested specification item in the set converted item matches the specification item of the product P. For example, the "match condition" is a determination condition, such as an "exact match" under which it is determined as matched when all of character strings are the same between the "requested specification" and the "converted product specification", or a "partial match" under which it is determined as matched when specific character strings or a predetermined number or more of characters are the same between the "requested specification" and the "converted product specification".

Specifically, FIG. 5 illustrates a case in which the conversion information storage unit 14c stores therein, with respect to the product type of "PT001", {conversion ID: "CID101", request format ID: "FID101", requested specification: "RS101", product ID: "PID101", product specification ID: "PSID101", match condition: "MC101"}, {conversion ID: "CID102", request format ID: "FID101", requested specification: "RS101", product ID: "PID102", product specification ID: "PSID102", match condition: "MC102"}, {conversion ID: "CID103", request format ID: "FID201", requested specification: "RS201", product ID: "PID201", product specification ID: "PSID201", match condition: "MC103"}, ....

### 2-2-4-4. Weight information storage unit 14d

The weight information storage unit 14d stores therein the weight information. For example, the weight information storage unit 14d stores therein the weight information that is input via the input unit 11. Further, the weight information storage unit 14d stores therein the weight information that is generated by a calculation unit 15c of the control unit 15 (to be described later). Furthermore, the weight information storage unit 14d stores therein the weight information that is updated by the calculation unit 15c of the control unit 15 (to be described later). Moreover, the weight information storage unit 14d stores therein the weight information that indicates importance of each of the specification items of the product P for each of the customers C who is a user.

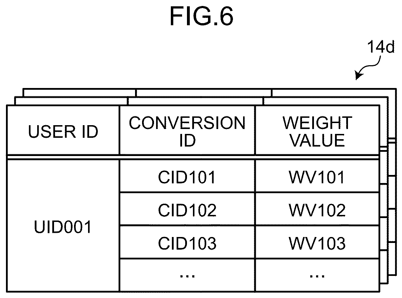

An example of data that is stored in the weight information storage unit 14d will be described below with reference to FIG. 6. FIG. 6 is a diagram illustrating an example of the weight information storage unit 14d of the providing server 10 according to one embodiment. In the example illustrated in FIG. 6, the weight information storage unit 14d includes items, such as a "user ID", a "conversion ID", and a "weight value".

The "user ID" indicates identification information for identifying the customer C who is a user. For example, the "user ID" is an identification number or an identification symbol of a plant administrator who purchases a field device. The "conversion ID" indicates identification information for identifying a set converted item. For example, the "conversion ID" is an identification number or an identification symbol of the converted item, which is set in order of input by the operator O. The "weight value" indicates a numerical value of weight corresponding to the converted item for each of the customers C. For example, the "weight value" is a numerical value that is set so as to increase when the importance is increased, such as when the specification item has been requested in the past by the customer C or when the specification item is the same as that of the product P that has been ordered in the past by the customer C. Further, the "weight value" is a numerical value that is set so as to decrease when the importance is decreased, such as when the specification item has not been requested in the past by the customer C or when the specification items is different from that of the product P that has been ordered in the past by the customer C. Furthermore, the "weight value" is a positive numerical value when the importance is high and a negative numerical value when the importance is low.

Specifically, FIG. 6 illustrates a case in which the weight information storage unit 14d stores therein, with respect to the customer C identified by "UID001", {conversion ID: "CID101", weight value: "WV101"}, {conversion ID: "CID102", weight value: "WV102"}, {conversion ID: "CID103", weight value: "WV103"}, ....

### 2-2-4-5. Proposal information storage unit 14e

The proposal information storage unit 14e stores therein the proposal information. For example, the proposal information storage unit 14e stores therein the proposal information that is generated by an extraction unit 15b of the control unit 15 (to be described later). Further, the proposal information storage unit 14e stores therein the proposal information that is updated by a providing unit 15d of the control unit 15 (to be described later). Furthermore, the proposal information storage unit 14e stores therein the conformity degree that is calculated by the calculation unit 15c of the control unit 15 (to be described later).

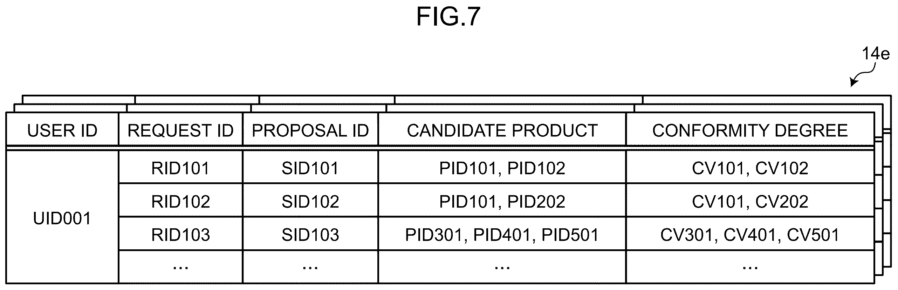

An example of data that is stored in the proposal information storage unit 14e will be described below with reference to FIG. 7. FIG. 7 is a diagram illustrating an example of the proposal information storage unit 14e of the providing server 10 according to one embodiment. In the example illustrated in FIG. 7, the proposal information storage unit 14e includes items such as a "user ID", a "request ID", a "proposal ID", a "candidate product", and a "conformity degree".

The "user ID" indicates identification information for identifying the customer C who is a user. For example, the "user ID" is an identification number or an identification symbol of a plant administrator who purchases a field device. The "request ID" is identification information for identifying the request information that is generated by the customer C. For example, the "request ID" is an identification number or an identification symbol of a request for quotation that is generated by the plant administrator who purchases a field device. The "proposal ID" is identification information for identifying proposal information to be proposed to the customer C. For example, the "proposal ID" is an identification number or an identification symbol of the proposal information including candidate products corresponding to a request for quotation that is generated by the plant administrator who purchases a field device. The "candidate product" indicates identification information for identifying at least the single product P that is extracted from among the products P indicated by the product information. For example, the "candidate product" is an identification number or an identification symbol of a product name, a product model name, a product model name code, or the like of the product P corresponding to a request for quotation that is generated by the plant administrator who purchases a field device. The "conformity degree" indicates a numerical value of the conformity degree corresponding to each of the products P indicated by the candidate products. For example, the "conformity degree" is a degree of match between each of the specification items of the product P requested by the customer C and each of the specification items of each of the candidate products, and is a score in a range of 0 to 100%. Here, the degree of match may be a score that is obtained by calculating a score that represents a match status, such as similarity or dissimilarity of the specification item requested by the customer C with respect to each of the specification items, and adding or subtracting the calculated score. Further, the "conformity degree" is a total value of weights of all of the specification items of the product P for each of the customers C, and is a score that is represented by a positive integer or a negative integer. Furthermore, the "conformity degree" is a score that is represented by a positive integer and a negative integer that is obtained by adding the degree of match and the weight.

Specifically, FIG. 7 illustrates an example in which the proposal information storage unit 14e stores therein, with respect to the customer C identified by "UID001", {request ID: "RID101", proposal ID: "SID101", candidate products: "PID101", "PID102", conformity degree: "CV101", "CV102"}, {request ID: "RID102", proposal ID: "SID102", candidate products: "PID101", "PID202", conformity degree: "CV101", "CV202"}, {request ID: "RID103", proposal ID: "SID103", candidate products: "PID301", "PID401", "PID501", conformity degree: "CV301", "CV401", "CV501"}, ....

### 2-2-5. Control unit 15

The control unit 15 controls the entire providing server 10. The control unit 15 includes the acquisition unit 15a, the extraction unit 15b, the calculation unit 15c, and the providing unit 15d. Here, the control unit 15 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-5-1. Acquisition unit 15a

The acquisition unit 15a acquires various kinds of information. Meanwhile, the acquisition unit 15a stores various kinds of acquired information in the storage unit 14. In the following, a request information acquisition control process will be described.

### Request information acquisition control process

The acquisition unit 15a performs the request information acquisition control process. For example, the acquisition unit 15a acquires the request information that indicates each of the specification items of the product P requested by the customer C who is a user. Further, the acquisition unit 15a acquires the request information that is generated in each of different formats. At this time, the acquisition unit 15a acquires the request format ID that is the identification information on each of the different formats.

A specific example of the request information acquisition control process will be described. Firstly, the acquisition unit 15a acquires, with respect to the customer C identified by "UID001", {request ID: "RID101", product type: "PT101", request format ID: "FID101", requested specification: "RS101"}, {request ID: "RID102", product type: "PT102", request format ID: "FID101", requested specification: "RS102"}, {request ID: "RID103", product type: "PT103", request format ID: "FID101", requested specification: "RS103"}, ... as the request information. Secondly, the acquisition unit 15a stores the acquired request information in the request information storage unit 14b.

### 2-2-5-2. Extraction unit 15b

The extraction unit 15b extracts various kinds of information. Meanwhile, the extraction unit 15b may store various kinds of extracted information in the storage unit 14. Further, the extraction unit 15b may refer to various kinds of information that are stored in the storage unit 14. In the following, a candidate product extraction control process will be described.

### Candidate product extraction control process

The extraction unit 15b performs the candidate product extraction control process. For example, the extraction unit 15b extracts candidate products to be proposed to the customer C from among the products P included in the product information, based on the acquired request information. Further, the extraction unit 15b extracts the candidate products from among the products classified in the product type. Furthermore, the extraction unit 15b identifies the product identification information that conforms to the request information by using the conversion information, and extracts the candidate products from the products P included in the product information by using the identified product identification information. Moreover, the extraction unit 15b identifies the product ID or the product specification ID that conforms to the request information by using the request format ID and the conversion information.

A specific example of the candidate product extraction control process will be described. Firstly, the extraction unit 15b refers to, with respect to the customer C identified by "UID001", ",{request ID: "RID101", product type: "PT101", request format ID: "FID101", requested specification: "RS101"} as the request information stored in the request information storage unit 14b.

Secondly, the extraction unit 15b refers to, with respect to the product type of "PT001", {conversion ID: "CID101", request format ID: "FID101", requested specification: "RS101", product ID: "PID101", product specification ID: "PSID101", match condition: "MC101"}, {conversion ID: "CID102", request format ID: "FID101", requested specification: "RS101", product ID: "PID102", product specification ID: "PSID102", match condition: "MC102"}, {conversion ID: "CID103", request format ID: "FID201", requested specification: "RS201", product ID: "PID201", product specification: "PS201", match condition: "MC103"}, ... as the conversion information stored in the conversion information storage unit 14c.

Thirdly, the extraction unit 15b identifies, with respect to the product type of "PT001", the conversion ID "CID101" for which the request format ID matches the request format ID "FID101" and the requested specification "RS101" matches the converted product specification "CPS101" under the match condition "MC101". Further, the extraction unit 15b identifies, with respect to the product type of "PT001", the conversion ID "CID102" for which the request format ID matches the request format ID "FID101" and the requested specification "RS101" matches the converted product specification "CPS102" under the match condition "MC102".

Fourthly, the extraction unit 15b identifies, with respect to the product type of "PT001", the product ID "PID101" and the product specification ID "PSID101" corresponding to the conversion ID "CID101". Further, the extraction unit 15b identifies, with respect to the product type of "PT001", the product ID "PID102" and the product specification ID "PSID102" corresponding to the conversion ID "CID102".

Fifthly, the extraction unit 15b refers to, with respect to the product type of "PT001", {product ID: "PID101", product specification: "PS101"}, {product ID: "PID102", product specification: "PS102"}, {product ID: "PID103", product specification: "PS103"}, ... as the product information stored in the product information storage unit 14a.

Sixthly, the extraction unit 15b extracts, with respect to the product type of "PT001", the candidate products {product ID: "PID101", product ID: "PID102"} as the products P for which at least one of the product ID and the product specification ID included in the product specification is matched.

Seventhly, the extraction unit 15b stores, with respect to the customer C identified by "UID001", the extracted candidate products {product ID: "PID101", product ID: "PID102"} as the proposal information in the proposal information storage unit 14e.

### 2-2-5-3. Calculation unit 15c

The calculation unit 15c calculates various kinds of information. Meanwhile, the calculation unit 15c may store various kinds of calculated information in the storage unit 14. Further, the calculation unit 15c may refer to various kinds of information that are stored in the storage unit 14. In the following, a conformity degree calculation control process, a weight information generation control process, and a weight information update control process will be described.

### Conformity degree calculation control process

The calculation unit 15c performs the conformity degree calculation control process. For example, the calculation unit 15c calculates the conformity degree with the request information for each of the extracted candidate products. At this time, the calculation unit 15c calculates, as the conformity degree, the degree of match between the requested specification as each of the specification item of the product P indicated by the request information and the product specification as each of the specification items of the candidate products indicated by the product information. Further, the calculation unit 15c calculates the conformity degree based on the weight information indicating importance of each of the specification items of the products for each of the customers C who are users.

A specific example of the conformity degree calculation control process will be described. Firstly, the calculation unit 15c calculates, with respect to the customer C identified by "UID001 ", the degree of match of the product P with the product ID "PID101", which is a candidate product in the proposal information stored in the proposal information storage unit 14e. In this case, the calculation unit 15c compares the requested specification "RS101" and the product specification "PS101", and calculates, as a degree of match "MV101", a percentage of match of each of the specification items included in the product specification "PS101" with each of the specification items included in the requested specification "RS101".

Secondly, the calculation unit 15c calculates, with respect to the customer C identified by "UID001", a weight of the product P with the product ID "PID101" that is a candidate product in the proposal information stored in the proposal information storage unit 14e. In this case, the calculation unit 15c refers to the weight information stored in the weight information storage unit 14d, and calculates a weight "W101" by adding a weight value "WV101" corresponding to the conversion ID "CID101" and a weight value "WV102" corresponding to the conversion ID "CID102".

Thirdly, the calculation unit 15c calculates, with respect to the customer C identified by "UID001 ", a conformity degree "CV101" by adding the degree of match "MV101" and the weight "W101".

Fourthly, the calculation unit 15c stores, with respect to the customer C identified by "UID001", the conformity degree of the product P with the product ID "PID101" that is the extracted candidate product in the proposal information storage unit 14e.

### Weight information generation control process

The calculation unit 15c performs the weight information generation control process. For example, the calculation unit 15c generates the weight information based on the user information on the customer C who is a user. In this case, the calculation unit 15c updates the weight information based on, as the user information, at least one of the request information, the order information on the product P that is ordered by the customer C from among the candidate products, and industry information on the industry to which the customer C belongs.

A specific example of the weight information generation control process will be described. Firstly, the calculation unit 15c refers to, with respect to the customer C identified by "UID001", past request information stored in the request information storage unit 14b, past order information stored in the proposal information storage unit 14e, the industry information identified from the customer ID, or the like.

Secondly, the calculation unit 15c generates, with respect to the customer C identified by "UID001", the weight information by using the request information, the past order information stored in the proposal information storage unit 14e, the industry information, or the like. In this case, the calculation unit 15c generates, with respect to the customer C identified by "UID001", the weight information in which the weight value is set such that a specification item that is frequently included in the past requested specification, a specification item that is frequently included in the past order information, a specification item for which a priority of the industry indicated by the industry information is high, or the like has a larger value.

Thirdly, the calculation unit 15c stores, with respect to the customer C identified by "UID001", the generated weight information {conversion ID: "CID101", weight value: "WV101"}, {conversion ID: "CID102", weight value: "WV102"}, {conversion ID: "CID103", weight value: "WV103"}, ... in the weight information storage unit 14d.

### Weight information update control process

The calculation unit 15c performs the weight information update control process. For example, the calculation unit 15c updates the weight information based on the user information on the customer C who is a user. In this case, the calculation unit 15c updates the weight information based on, as the user information, at least one of the request information, the order information on the product P that is ordered by the customer C from among the candidate products, and the industry information on the industry to which the customer C belongs.

A specific example of the weight information update control process will be described. Firstly, the calculation unit 15c refers to, with respect to the customer C identified by "UID001", past and latest request information stored in the request information storage unit 14b, past and latest order information stored in the proposal information storage unit 14e, latest industry information identified from the customer ID, or the like.

Secondly, the calculation unit 15c updates, with respect to the customer C identified by "UID001", the weight information by using the request information, the past and latest order information stored in the proposal information storage unit 14e, the industry information, or the like. In this case, the calculation unit 15c updates, with respect to the customer C identified by "UID001", the weight information in which the weight value is set such that a specification item that is frequently included in the past and latest requested specification, a specification item that is frequently included in the past and latest order information, a specification item for which the latest priority of the industry indicated by the industry information is high, or the like has a larger value.

Thirdly, the calculation unit 15c stores, with respect to the customer C identified by "UID001", the updated weight information {conversion ID: "CID101", weight value: "WV101"'}, {conversion ID: "CID102", weight value: "WV102'"}, {conversion ID: "CID103", weight value: "WV103'"}, ... in the weight information storage unit 14d.

### 2-2-5-4. Providing unit 15d

The providing unit 15d provides various kinds of information. Meanwhile, the providing unit 15d may store various kinds of output information in the storage unit 14. Further, the providing unit 15d may refer to various kinds of information that are stored in the storage unit 14. In the following, a proposal information provision control process and a proposal information update control process will be described.

### Proposal information provision control process

The providing unit 15d performs the proposal information provision control process. For example, the providing unit 15d provides the proposal information indicating candidate products based on the conformity degree. In this case, the providing unit 15d displays the proposal information in which the candidate products are sorted in accordance with the conformity degree. Specifically, the providing unit 15d displays the proposal information in which the candidate products are sorted in accordance with the degree of match. Further, the providing unit 15d displays the proposal information in which the candidate products are sorted in accordance with the weight. Furthermore, the providing unit 15d displays the proposal information in which the candidate products are sorted in accordance with the degree of match and the weight. Moreover, the providing unit 15d displays the proposal information indicating the candidate products in which characters or an area of the specification item that matches each of the specification items of each of the products is colored.

A specific example of the proposal information provision control process will be described. Firstly, the providing unit 15d refers to, with respect to the customer C identified by "UID001", {request ID: "RID101", proposal ID: "SID101", candidate products: "PID101", "PID102", conformity degree: "CV101", "CV102"} stored in the proposal information storage unit 14e as the proposal information.

Secondly, the providing unit 15d transmits the referred proposal information to the operator terminal 20, and causes the operator terminal 20 to control the display screen so as to display the candidate products in order of the highest conformity degree from the left of the screen.

Thirdly, the providing unit 15d transmits the referred proposal information to the operator terminal 20, and causes the operator terminal 20 to control the display screen so as to display the product specification of the candidate products, display characters indicating a specification item that matches the requested specification in green, and display characters indicating a specification item that does not match the requested specification in black.

### Proposal information update control process

The providing unit 15d performs the proposal information update control process. For example, the providing unit 15d updates the proposal information based on the user information. In this case, the providing unit 15d updates the proposal information based on, as the user information, the order information.

A specific example of the proposal information update control process will be described. Firstly, the providing unit 15d acquires, with respect to the customer C identified by "UID001", the order information "OI101 on the product that is ordered by the customer C from among the candidate products {product ID: "PID101", product ID: "PID102"} transmitted by the operator terminal 20.

Secondly, the providing unit 15d associates, with respect to the customer C identified by "UID001", the candidate products {product ID: "PID101", product ID: "PID102"} and the order information "OI101", and stores the candidate products and the order information in the proposal information storage unit 14e.

### 2-3. Configuration example and process example of operator terminal 20

A configuration example and a process example of the operator terminal 20 will be described below with reference to FIG. 2. The operator terminal 20 includes an input-output unit 21, a transmission-reception unit 22, and a communication unit 23.

### 2-3-1. Input-output unit 21

The input-output unit 21 controls input of various kinds of information to the operator terminal 20. For example, the input-output unit 21 is implemented by a mouse, a keyboard, a touch panel, or the like, and receives input of various kinds of information to the operator terminal 20. The input-output unit 21 controls output of various kinds of information from the operator terminal 20. For example, the input-output unit 21 is implemented by a display, a speaker, or the like, and displays various kinds of information that are stored in the operator terminal 20. Further, the input-output unit 21 displays the candidate product display screen as the proposal information transmitted from the providing server 10.

### 2-3-2. Transmission-reception unit 22

The transmission-reception unit 22 transmits various kinds of information. For example, the transmission-reception unit 22 transmits the proposal information to the providing server 10. Further, the transmission-reception unit 22 transmits the order information to the providing server 10. Furthermore, the transmission-reception unit 22 receives various kinds of information. For example, the transmission-reception unit 22 receives the proposal information from the providing server 10.

### 2-3-3. Communication unit 23

The communication unit 23 controls communication with a different apparatus. For example, the communication unit 23 performs data communication with each of communication apparatuses via a router or the like. Further, the communication unit 23 is able to perform data communication with a terminal or the like (not illustrated).

### 3. Specific example of each of processes of the information providing system 100

A specific example of each of processes of the information providing system 100 according to one embodiment will be described below. In the following, a specific example of various kinds of information in the information providing system 100, a specific example of the conformity degree calculation process of the information providing system 100, and a specific example of a proposal information display screen of the information providing system 100 will be described.

### 3-1. Specific example of various kinds of information in the information providing system 100

A specific example of various kinds of information in the information providing system 100 will be described. In the following, a specific example of the product information, a specific example of the request information, a specific example of the conversion information, a specific example of the weight information, and a specific example of the proposal information will be described.

### 3-1-1. Specific example of product information

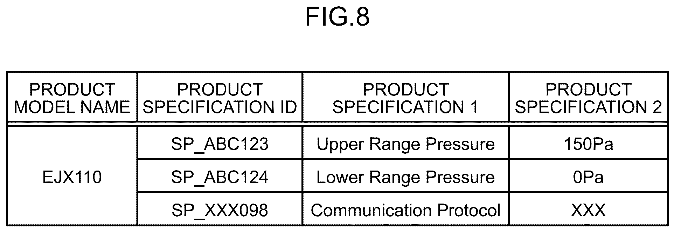

A specific example of the product information in the information providing system 100 will be described with reference to FIG. 8. FIG. 8 is a diagram illustrating the specific example of the product information in the information providing system 100. In the example illustrated in FIG. 8, as the product information with respect to the product P with the "product model name" of "EJX110" that is the product ID, product information for which the product specification ID and a function and a specification value of the product P are {product specification ID: "SP_ABC123", product specification 1: "Upper Range Pressure", product specification 2: "150Pa"}, {product specification ID: "SP_ABC124", product specification 1: "Lower Range Pressure", product specification 2: "0Pa"}, {product specification ID: "SP_XXX098", product specification 1: "Communication Protocol", product specification 2: "XXX"} is illustrated.

As described above, the product information includes, for example, the product ID for identifying the product P, the product specification ID for identifying the product specification item of the product P, and the plurality of product specification items that are set in advance with respect to the product P. Further, the product information may include a manual used for installation, operation, maintenance, or the like of the product P.

The providing server 10 identifies the product ID included in the product information based on the product ID that is identified by using the conversion information, and extracts the candidate products. Further, the providing server 10 identifies the product specification ID included in the product information based on the product specification ID that is identified by using the conversion information, and extracts the candidate products. Furthermore, the providing server 10 may periodically collect and update the product information.

### 3-1-2. Specific example of request information

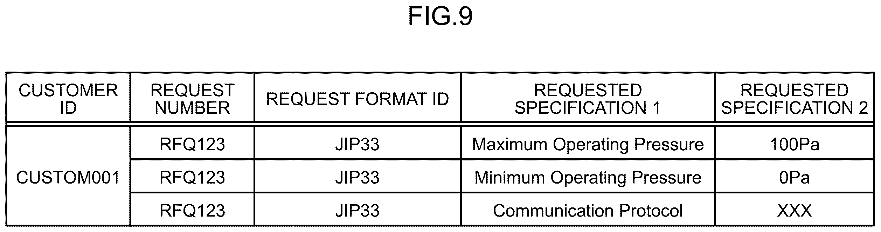

A specific example of the request information in the information providing system 100 will be described with reference to FIG. 9. FIG. 9 is a diagram illustrating the specific example of the request information in the information providing system 100. In the example illustrated in FIG. 9, with respect to a request for quotation the customer C with the "customer ID" of "CUSTOM001", request information is illustrated in which the request ID, the request format ID, and the function and the specification value of the product P are {request number: "RFQ123", request format ID: "JIP33", requested specification 1: "Maximum Operating Pressure", product specification 2: "100Pa"}, {request number: "RFQ123", request format ID: "JIP33", requested specification 1: "Minimum Operating Pressure", product specification 2: "0Pa"}, {request number: "RFQ123", request format ID: "JIP33", requested specification 1: "Communication Protocol", product specification 2: "XXX"}.

As described above, the request information includes, for example, the customer ID for identifying the customer C, the request ID for identifying the request for quotation, the request format ID for identifying the format of the request for quotation, and the plurality of requested specification items that are requested by the customer C with respect to the product P. Further, the request information may include information on a name of a contact person for the customer C, a desired delivery date of the product P, a name of a sales representative, a budget limit, or the like.

### 3-1-3. Specific example of conversion information

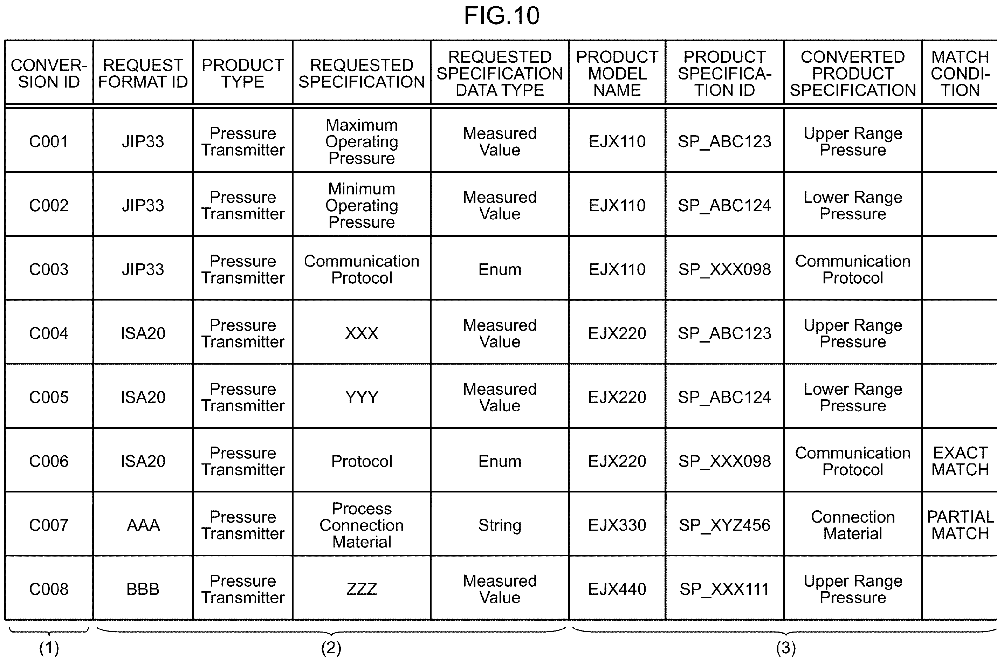

A specific example of the conversion information in the information providing system 100 will be described with reference to FIG. 10. FIG. 10 is a diagram illustrating the specific example of the conversion information in the information providing system 100. In the following, the conversion ID, a request associated item, and a product associated item will be described.

### 3-1-3-1. Conversion ID

In the example illustrated in FIG. 10(1), pieces of conversion information with "C001", "C002", "C003", "C004", "C005", "C006", "C007", and "C008" as the "conversion ID" for identifying the converted item are illustrated. The "conversion ID" is, for example, an identification number or an identification symbol of the converted item that is set in order of input by the operator O.

### 3-1-3-2. Request associated item

In the example illustrated in FIG. 10(2), the conversion information that includes, as request associated items that are associated with the request information, the "request format ID", the "product type", the "requested specification", and the "requested specification data type" is illustrated.

### Request format ID

In the example of the "request format ID" illustrated in FIG. 10(2), "JIP33", "ISA20", "AAA", and "BBB" are illustrated as the identification information on the format of the request for quotation.

### Product type

In the example of the "product type" illustrated in FIG. 10(2), "Pressure Transmitter" is illustrated as the product type of the field device requested by the customer C.

### Requested specification

In the example of the "requested specification" illustrated in FIG. 10(2), "Maximum Operating Pressure", "Minimum Operating Pressure", "Communication Protocol", "XXX", "YYY", "Protocol", "Process Connection Material", and "ZZZ" are illustrated as the product specifications of the field device requested by the customer C.

### Request data type

In the example the "requested specification data type" illustrated in FIG. 10(2), "Measured Value", "Enum (enumeration type)" and "String (string type)" are illustrated as the data type of the field device requested by the customer C.

### 3-1-3-3. Product associated item

In the example illustrated in FIG. 10(3), the conversion information including the "product model name", the "product specification ID", the "converted product specification", and the "match condition" as the product associated items that are associated with the product information is illustrated.

### Product model name

In the example of the "product model name" illustrated in FIG. 10(3), "EJX110", "EJX220", "EJX330", and "EJX440" are illustrated as the product model names that are the product IDs of the field device requested by the customer C.

### Product specification ID

In the example of the "product specification ID" illustrated in FIG. 10(3), "SP_ABC123", "SP_ABC124", "SP_XXX098", "SP_XYZ456", and "SP_XXX111" are illustrated as the identification information on the product specification on the field device that is the product P.

### Converted product specification

In the example of the "converted product specification" illustrated in FIG. 10(3), as the product specifications of the product information corresponding to the requested specification in the request information, "Upper Range Pressure", "Lower Range Pressure", "Communication Protocol", and "Connection Material" are illustrated.

### Match condition

In the example of the "match condition" illustrated in FIG. 10(3), "exact match" and "partial match" are illustrated as the determination condition for match with the product specification of the product information corresponding to the requested specification in the request information. The "exact match" is a determination condition for determining as matched when all of character strings are the same between the "requested specification" the "converted product specification". Further, the "partial match" is a determination condition for determining as matched when specific character strings are the same between the "requested specification" and the "converted product specification".

In the example of the "match condition" illustrated in FIG. 10(3), the providing server 10 determines as unmatched, with respect to the conversion ID "C006", because the character string of the requested specification "Protocol" and the character string of the converted product specification "Communication Protocol" do not "exactly match" with each other. Further, the providing server 10 determines as matched, with respect to the conversion ID "C007", because the character string of the requested specification "Process Connection Material" and the character string of the converted product specification "Connection Material" "partly match" with each other.

Meanwhile, the providing server 10 may further consider a match status when the requested specification and the converted product specification match with each other. For example, when the requested specification for "Upper Range Pressure" is "equal to or larger than 10Pa", the providing server 10 determines that the product P with the converted product specification "15Pa" is closer to the condition and more preferable than the product P with the converted product specification "100Pa". Further, when the requested specification for "Lower Range Pressure" is "smaller than 0Pa", the providing server 10 determines that the product P with the converted product specification "-5Pa" is closer to the condition and more preferable than the product P with the converted product specification "-100Pa". In this case, when the requested specification matches the converted product specification under a closer condition, the providing server 10 may reflect this fact in the numerical value when calculating the degree of match. For example, with respect to a converted product specification that is matched under a closer condition, the providing server 10 may calculate the degree of match by multiplying a predetermined value so as to correspond to one or more items even for a single item.

### 3-1-4. Specific example of weight information

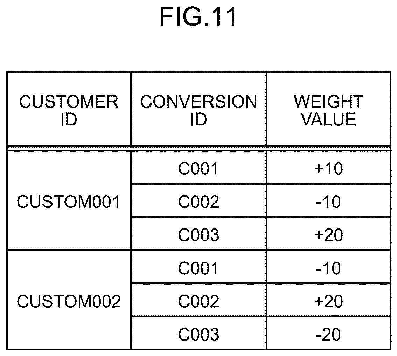

A specific example of the weight information in the information providing system 100 will be described with reference to FIG. 11. FIG. 11 is a diagram illustrating the specific example of the weight information in the information providing system 100. In the example illustrated in FIG. 11, with respect to the customer C with the "customer ID" of "CUSTOM001", pieces of request information for which the conversion ID and the weight value are set to {conversion ID: "C001", weight value: "+10"}, and {conversion ID: "C002", weight value: "-10"}, {conversion ID: "C003", weight value: "+20"} are illustrated. Further, in the example illustrated in FIG. 11, with respect to the customer C with the "customer ID" of "CUSTOM002", pieces of weight information for which the conversion ID and the weight value are {conversion ID: "C001", weight value: "-10"}, {conversion ID: "C002", weight value: "+20"}, and {conversion ID: "C003", weight value: "-20"} are illustrated.

As described above, the weight information is information by which importance of the requested specification can be considered for each of the customers C. In the example illustrated in FIG. 11, with respect to the customer C with the "customer ID" of "CUSTOM001", the specification item corresponding to "C003" is considered most important, and therefore, a larger weight value is set. Further, in the example illustrated in FIG. 11, with respect to the customer C with the "customer ID" of "CUSTOM002", the specification item corresponding to "C002" is considered most important, and therefore, a larger weight value is set. Furthermore, in the example illustrated in FIG. 11, the weight value is set to a positive numerical value when the importance is high, and the weight value is set to a negative numerical value when the importance is low; however, the weight value may be set as a ratio corresponding to the importance. For example, the weight value may be set to a ratio approaching 100% when the importance is high and set to a ratio approaching 0% when the importance is low 0%.

The providing server 10 is able to calculate the weight information. For example, the providing server 10 sets, based on the proposal information, a larger weight value for the specification item that has been requested in the past by the customer C or the specification item of the product P that has been ordered in the past by the customer C, in accordance with the number of appearances. Further, the providing server 10 sets, based on the proposal information, a smaller weight value or zero for the specification item that has not been requested in the past by the customer C or the specification item of the product P that has not been ordered in the past by the customer C. Furthermore, when the proposal information is updated, the providing server 10 calculates the weight value based on the updated proposal information and updates the weight information.

### 3-1-5. Specific examples of proposal information

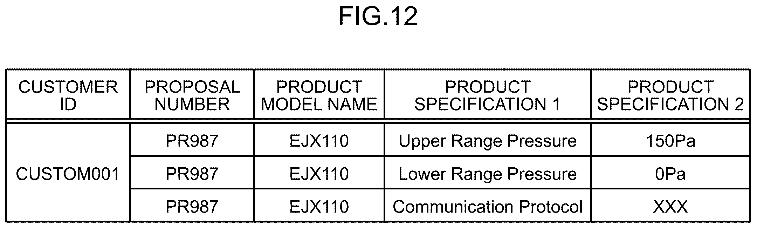

Specific examples 1 to 3 of the proposal information in the information providing system 100 will be described with reference to FIG. 12 to FIG. 14. In the following, the specific example 1 indicating candidate products to be proposed to the customer C, the specific example 2 indicating a correspondence relationship between the request ID and the proposal ID, and the specific example 3 indicating the product P ordered by the customer C will be described.

### 3-1-5-1. Specific example 1

The specific example 1 indicating the candidate products to be proposed to the customer C will be described below with reference to FIG. 12 as a specific example of the proposal information in the information providing system 100. FIG. 12 is a diagram illustrating the specific example 1 of the proposal information in the information providing system 100. In the example illustrated in FIG. 12, with respect to the customer C with the "customer ID" of "CUSTOM001", the proposal information for which the proposal ID, the product ID, and the function and the specification value of the product P are {proposal number: "PR987", product model name: "EJX110", product specification 1: "Upper Range Pressure", product specification 2: "150Pa"}, {proposal number: "PR987", product model name: "EJX110", product specification 1: "Lower Range Pressure", product specification 2: "0Pa"}, {proposal number: "PR987", product model name: "EJX110", product specification 1: "Communication Protocol ", product specification 2: "XXX"} is illustrated.

As in the specific example 1 as described above, the proposal information includes, for example, the customer ID for identifying the customer C, the proposal ID for identifying a proposal to the customer C, the product ID for identifying the product P extracted from the product information, and the product specification item of the product P extracted from the product information. Further, the proposal information may include the conformity degree with the request information for each of the candidate products.

The providing server 10 generates the proposal information including the candidate products extracted from the product information. Further, the conformity degree with the request information is calculated for each of the candidate products extracted from the product information. Furthermore, the providing server 10 displays the proposal information including the candidate products and the conformity degree, as the proposal information display screen, on the display of the operator terminal 20. Moreover, the providing server 10 transmits the proposal information including the candidate products to the terminal of the customer C. Meanwhile, specific examples of the conformity degree and the proposal information display screen will be described later.

### 3-1-5-2. Specific example 2

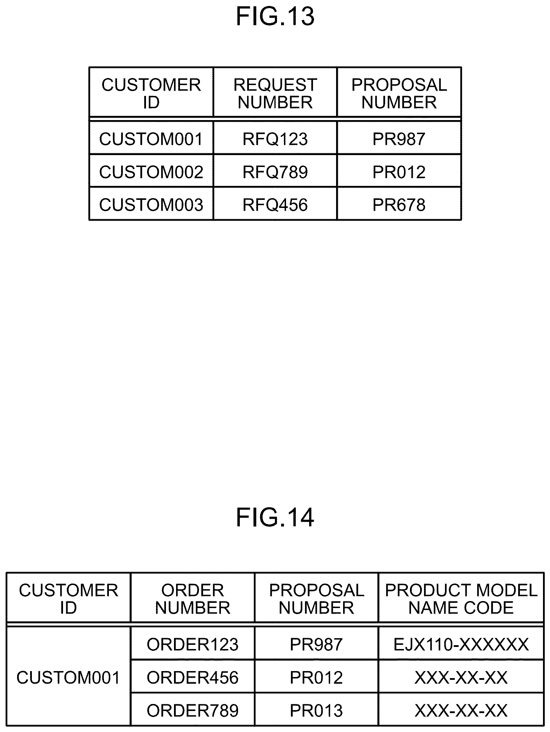

The specific example 2 indicating the correspondence relationship between the request ID and the proposal ID will be described below with reference to FIG. 13 as a specific example of the proposal information in the information providing system 100. FIG. 13 is a diagram illustrating the specific example 2 of the proposal information in the information providing system 100. In the example illustrated in FIG. 13, the proposal information for which the customer ID, the request ID, and the proposal ID are {customer ID: "CUSTOM001", request number: "RFQ123", proposal number: "PR987"}, {customer ID: "CUSTOM002", request number: "RFQ789", proposal number: "PR012"}, {customer ID: "CUSTOM003", request number: "RFQ456", proposal number: "PR678"} is illustrated.

As in the specific example 2 as described above, the proposal information includes, for example, the customer ID for identifying the customer C, the request ID for identifying the request for quotation, and the proposal ID for identifying a proposal to the customer C.

### 3-1-5-3. Specific example 3

The specific example 3 indicating the product P ordered by the customer C will be described below with reference to FIG. 14 as a specific example of the proposal information in the information providing system 100. FIG. 14 is a diagram illustrating the specific example 3 of the proposal information in the information providing system 100. In the example illustrated in FIG. 14, with respect to the customer C with the "customer ID" of "CUSTOM001 ", the proposal information for which the order ID, the proposal ID, and the product ID are {order number: "ORDER123", proposal number: "PR987", product model name code: "EJX110-XXXXXX"}, {order number: "ORDER456", proposal number: "PR012", product model name code: "XXX-XX-XX"}, {order number: "ORDER789", proposal number: "PR013", product model name code: "XXX-XX-XX"} is illustrated.

As in the specific example 3 as described above, the proposal information includes, for example, the customer ID for identifying the customer C, an order ID for identifying an order form made by the customer C, the proposal ID for identifying a proposal to the customer C, and the product ID for identifying the product P ordered by the customer C.

The providing server 10, when receiving an order from the customer C with respect to the proposal information that is transmitted to the terminal of the customer C, updates the proposal information so as to include the order information indicating the order of the product P placed by the customer C.

### 3-1-5-4. Specific example 4

In addition to the specific examples as described above, the proposal information may include various kinds of information. The proposal information may include, for example, industry information indicating an industry to which the customer C belongs. For example, the industry information may be information including a classification, such as a manufacturing industry, a retail industry, or a delivery industry, and a requested item that is considered important with respect to the product P that is commonly ordered.

### 3-2. Specific example of conformity degree calculation process of information providing system 100

A specific example of the conformity degree calculation process of the information providing system 100 will be described. In the following, a specific example 1 in which the degree of match is used as the conformity degree calculation process, a specific example 2 in which the weight is used as the conformity degree, and a specific example 3 in which the degree of match and the weight are used as the conformity degree will be described.

### 3-2-1. Specific example 1

The specific example 1 in which the degree of match is used will be described as a specific example of the conformity degree calculation process of the information providing system 100. In the following, an example will be described in which a "field device A", a "field device B", and a "field device C" are extracted as candidate products.

Firstly, when a product specification of the "field device A" includes a "product specification A-1", a "product specification A-2", and a "product specification A-3" and if the requested specification of the customer C matches the "product specification A-1" and the "product specification A-2", the providing server 10 calculates the degree of match as "67%" because 2/3 = 0.666.

Secondly, when a product specification of the "field device B" includes a "product specification B-1", a "product specification B-2", a "product specification B-3", and a "product specification B-4" and if the requested specification of the customer C matches the "product specification B-2", the "product specification B-3", and the "product specification B-4", the providing server 10 calculates the degree of match as "75%" because 3/4 = 0.75.

Thirdly, when a product specification of the "field device C" includes a "product specification C-1", a "product specification C-2", a "product specification C-3", a "product specification C-4", and a "product specification C-5" and if the requested specification of the customer C matches the "product specification C-2", the "product specification C-3", the "product specification C-4", and the "product specification C-5", the providing server 10 calculates the degree of match as "80%" because 4/5 = 0.80.

Fourthly, the providing server 10 stores, as the conformity degree with the request information, the "field device A: 67%", the "field device B: 75%", and the "field device C": 80%" in the proposal information storage unit 14e.

Fifthly, the providing server 10 performs sorting in descending order of the conformity degree, that is, in order of the "field device C"", the "field device B", and the "field device A" and displays the field devices in the sorted order in the candidate product display screen. In this case, the providing server 10 is able to display the matched product specification in a highlighted manner (for example, colored or increased size) in the candidate product display screen. Furthermore, the providing server 10 is able to hide the product specification for which the conformity degree is smaller than a predetermined value (for example: smaller than 70%) in the candidate product display screen.

### 3-2-2. Specific example 2

The specific example 2 in which the weight is used will be described as a specific example of the conformity degree calculation process of the information providing system 100. In the following, an example will be described in which the "field device A", the "field device B", and the "field device C" are extracted as candidate products.

Firstly, when the product specification of the "field device A" includes the "product specification A-1" (the weight value of the customer C: "+20"), the "product specification A-2" (the weight value of the customer C: "+10"), and the "product specification A-3" (the weight value of the customer C: "0") and if the requested specification of the customer C matches the "product specification A-1" and the "product specification A-2", the providing server 10 calculates the weight as "30" because (+20) + (+10) = (+30).

Secondly, when the product specification of the "field device B" includes the "product specification B-1" (the weight value of the customer C: "+20"), the "product specification B-2" (the weight value of the customer C: "+10"), the "product specification B-3" (the weight value of the customer C: "0"), and the "product specification B-4" (the weight value of the customer C: "-10") and if the requested specification of the customer C matches the "product specification B-2", the "product specification B-3", and the "product specification B-4", the providing server 10 calculates the weight as "0" because (+10) + 0 + (-10) = 0.

Thirdly, when the product specification of the "field device C" includes the "product specification C-1" (the weight value of the customer C: "+20"), the "product specification C-2" (the weight value of the customer C: "+10"), the "product specification C-3" (the weight value of the customer C: "0"), the "product specification C-4" (the weight value of the customer C: "-10"), and the "product specification C-5" (the weight value of the customer C: "-20") and if the requested specification of the customer C matches the "product specification C-2", the "product specification C-3", the "product specification C-4", and the "product specification C-5", the providing server 10 calculates the weight as "-20" because (+10) + 0 + (-10) + (-20) = (-20).

Fourthly, the providing server 10 stores, as the conformity degree with the request information, the "field device A: 30", the "field device B: 0", and the "field device C": -20" in the proposal information storage unit 14e.

Fifthly, the providing server 10 performs sorting in descending order of the conformity degree, that is, in order of the "field device A", the "field device B", and the "field device C" and displays the field devices in the sorted order in the candidate product display screen. In this case, the providing server 10 is able to display the matched product specification in a highlighted manner (for example, colored or increased size) in the candidate product display screen. Furthermore, the providing server 10 is able to hide the product specification for which the conformity degree is smaller than a predetermined value (for example: smaller than 10) in the candidate product display screen.

### 3-2-3. Specific example 3

The specific example 3 in which the degree of match and the weight are used will be described as a specific example of the conformity degree calculation process of the information providing system 100. In the following, an example will be described in which the "field device A", the "field device B", and the "field device C" are extracted as candidate products.

Firstly, when the product specification of the "field device A" includes the "product specification A-1" (the weight value of the customer C: "+20"), the "product specification A-2" (the weight value of the customer C: "+10"), and the "product specification A-3" (the weight value of the customer C: "0") and if the requested specification of the customer C matches the "product specification A-2" and the "product specification A-3", the providing server 10 calculates the degree of match as "67%" because 2/3 = 0.666 and calculates the weight as "10" because (+10) + 0 = (+10). Further, the providing server 10 calculates the conformity degree as "77" by adding the degree of match "67%" and the weight "10".

Secondly, when the product specification of the "field device B" includes the "product specification B-1" (the weight value of the customer C: "+20"), the "product specification B-2" (the weight value of the customer C: "+10"), the "product specification B-3" (the weight value of the customer C: "0"), and the "product specification B-4" (the weight value of the customer C: "-10") and if the requested specification of the customer C matches the "product specification B-2", the "product specification B-3", and the "product specification B-4", the providing server 10 calculates the degree of match as "75%" because 3/4 = 0.75 and calculates the weight as "0" because (+10) + 0 + (-10) = 0. Further, the providing server 10 calculates the conformity degree as "75" by adding the degree of match "75%" and the weight "0".

Thirdly, when the product specification of the "field device C" includes the "product specification C-1" (the weight value of the customer C: "+20"), the "product specification C-2" (the weight value of the customer C: "+10"), the "product specification C-3" (the weight value of the customer C: "0"), the "product specification C-4" (the weight value of the customer C: "-10"), and the "product specification C-5" (the weight value of the customer C: "-20") and if the requested specification of the customer C matches the "product specification C-2", the "product specification C-3", the "product specification C-4", and the "product specification C-5", the providing server 10 calculates the degree of match as "80%" because 4/5 = 0.80 and calculates the weight as "-20" because (+10) + 0 + (-10) + (-20) = (-20). Further, the providing server 10 calculates the conformity degree as "60" by adding the degree of match "80%" and the weight "-20".

Fourthly, the providing server 10 stores, as the conformity degree with the request information, the "field device A: 77", the "field device B: 75", and the "field device C": 60" in the proposal information storage unit 14e.

Fifthly, the providing server 10 performs sorting in descending order of the conformity degree, that is, in order of the "field device A", the "field device B", and the "field device C" and displays the field devices in the sorted order in the candidate product display screen. In this case, the providing server 10 is able to display the matched product specification in a highlighted manner (for example, colored or increased size) in the candidate product display screen. Furthermore, the providing server 10 is able to hide the product specification for which the conformity degree is smaller than a predetermined value (for example: smaller than 50) in the candidate product display screen.

### 3-2-4. Others

The providing server 10 may calculate the conformity degree other than the above. For example, when a specific product specification that is considered important by the customer C is completely matched, the providing server 10 calculates the conformity degree by increasing a match rate by 1.5 times. In contrast, when the specific product specification that is considered important by the customer C is not matched at all, the providing server 10 calculates the conformity degree by increasing the match rate by 0.5 time.

Furthermore, the providing server 10 is able to calculate the conformity degree by taking into account a match status between the requested specification and the converted product specification. For example, when the match status between the requested specification and the converted product specification indicates that the conditions are similar and preferable (for example: close to the value of the requested specification), the providing server 10 may calculate the conformity degree by using the degree of match to which a predetermined value is added. In contrast, when the match status between the requested specification and the converted product specification indicates that the conditions are not similar and not preferable (for example: far from the value of the requested specification), the providing server 10 may calculate the conformity degree by using the degree of match from which a predetermined value is subtracted.

### 3-3. Specific example of proposal information display screen of information providing system 100

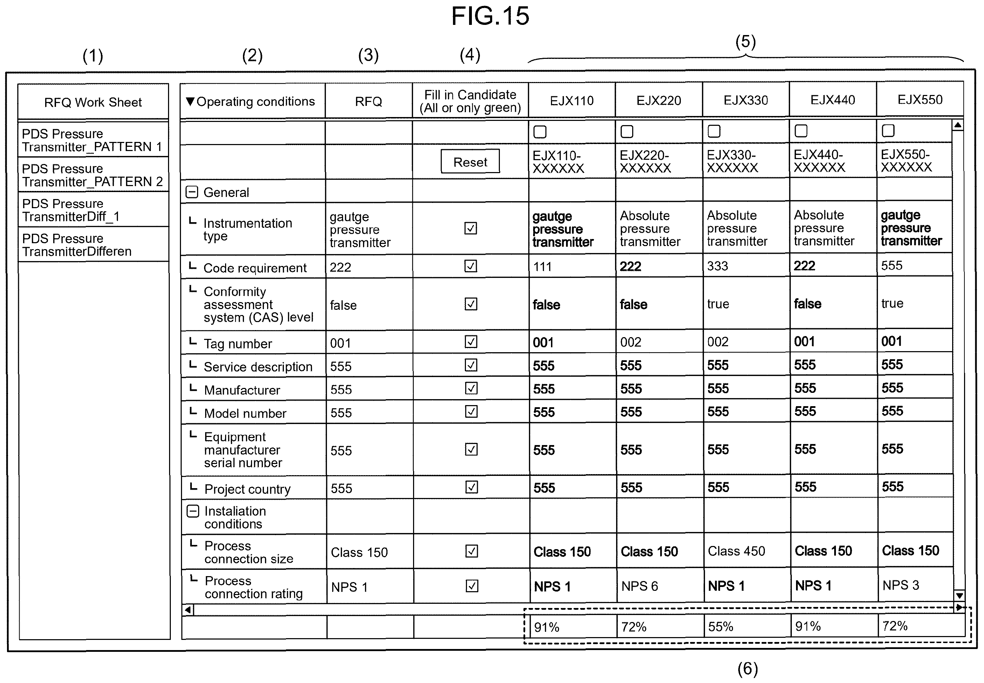

A specific example of the proposal information display screen of the information providing system 100 will be described with reference to FIG. 15. FIG. 15 is a diagram illustrating the specific example of the proposal information display screen of the information providing system 100. In the following, the request format, the requested specification, the candidate products, and the conformity degree that are displayed on the proposal information display screen of the operator terminal 20 will be described.

### 3-3-1. Request format

As illustrated in FIG. 15(1), the request format indicating the format of the request for quotation that is generated by the customer C is displayed on the proposal information display screen of the operator terminal 20. In the example illustrated in FIG. 15(1), the operator terminal 20 displays, as an "RFQ Work Sheet" that is the request format of the request for quotation that is generated by the customer C, "PDS Pressure Transmitter_pattern 1", "PDS Pressure Transmitter_pattern 2", "PDS Pressure Transmitter Diff_1", and "PDS Pressure Transmitter Differen".

### 3-3-2. Requested specification

As illustrated in FIG. 15(2) and FIG. 15(3), the requested specification indicating the product specification of the product P in the request for quotation that is generated by the customer C is displayed on the proposal information display screen of the operator terminal 20. In the example illustrated in FIG. 15(2), the operator terminal 20 displays an item name for each of "Operating conditions", "General" and "Installation conditions" that are input items of the request for quotation that is generated by the customer C.

In the example illustrated in FIG. 15(3), the operator terminal 20 displays an input item corresponding to the item name of the input item with respect to "RFQ (request for quotation)" that is an input value of the request for quotation that is generated by the customer C.

### 3-3-3. Candidate products

As illustrated in FIG. 15(4) and FIG. 15(5), the candidate products for the product P that are extracted based on the requested specification of the customer C are displayed on the proposal information display screen of the operator terminal 20. In the example illustrated in FIG. 15(4), the operator terminal 20 displays a checkbox for each of the item names of the input items with respect to "Fill in Candidate" by which the requested specification of the customer C and the product specification of the product P are selectable. In this case, the operator O is able to select the requested specification of the customer C by inputting a check mark in the checkbox and reflect the selected requested specification in extraction of the candidate products. In contrast, the operator O is able to eliminate the requested specification of the customer C by deleting a check mark in the checkbox and prevent reflection of the eliminated requested specification in extraction of the candidate products.

In the example illustrated in FIG. 15(5), the operator terminal 20 displays five kinds of products P with "EJX110", "EJX220", "EJX330", "EJX440", and "EJX550" as the product IDs of the extracted candidate products for the product P. Further, in the example illustrated in FIG. 15(5), the operator terminal 20 displays the product specification of the product P corresponding to the item name if the input item of the request for quotation that is generated by the customer C for each of the product IDs of the extracted candidate products for the product P.

Here, when the product specification of the product P matches the requested specification of the customer C, the operator terminal 20 displays the matched product specification by coloring corresponding characters (for example: red, green, or yellow) (bold in FIG. 15(5)). Further, the operator terminal 20 is able to enlarge a size or change the font (for example, italic or bold) with respect to the characters of the matched product specification. Furthermore, the operator terminal 20 is able to display the matched product specification while coloring a display field of the matched product specification (for example: red, green, or yellow). Moreover, the operator terminal 20 may change characters or gradation of the color of a display field of the matched product specification in accordance with the match status, display the matched product specification in a darker color when the condition is more closely met (for example: closer to a numerical value of the requested specification), and display the matched product specification in a lighter color when the condition is more distantly met (for example: far from the numerical value of the requested specification).

### 3-3-4. Conformity degree

As illustrated in FIG. 15(6), in the proposal information display screen of the operator terminal 20, the conformity degree between the extracted candidate products and the request for quotation that is generated by the customer C is displayed. In the example illustrated in FIG. 15(6), the operator terminal 20 displays "91%" for "EJX110", "72%" for "EJX220", "55%" for "EJX330", "91%" for "EJX440", and "72%" for "EJX550" as the degree of match between the requested specification of the customer C and the product specification of the product P.

Here, the operator terminal 20 is able to display the candidate products while sorting the candidate products in descending order of the conformity degree. Further, the operator terminal 20 is able to hide the product P for which the conformity degree is smaller than a predetermined value.

### 4. Flow of each of processes of information providing system 100

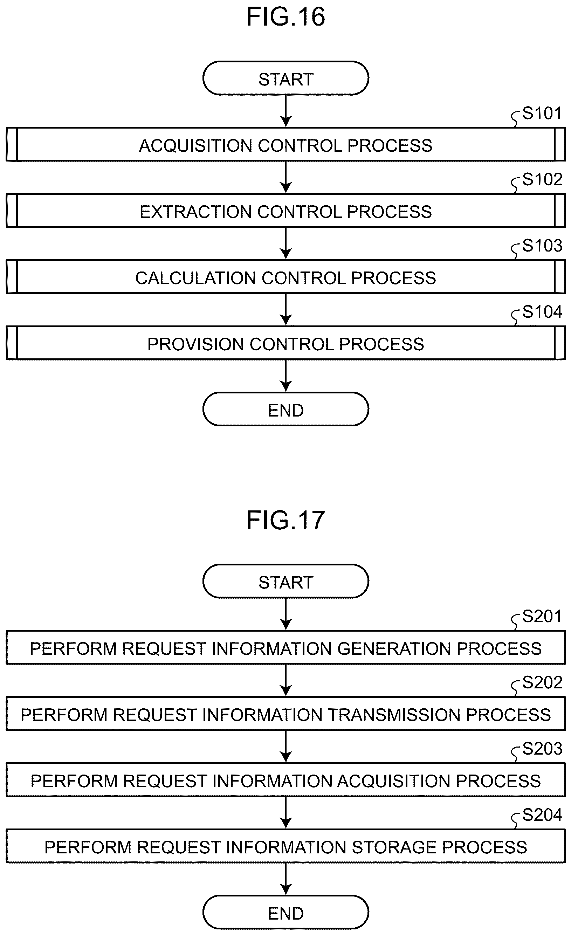

Flows of processes of the information providing system 100 according to one embodiment will be described with reference to FIG. 16 to FIG. 20. In the following, the flow of the entire process of the information providing system 100 will be first described, and thereafter, as each of the processes, an acquisition control process, an extraction control process, a calculation control process, and a provision control process will be described.

### 4-1. Entire process of information providing system 100

The flow of the entire process of the information providing system 100 according to one embodiment will be described with reference to FIG. 16. FIG. 16 is a flowchart illustrating an example of the entire flow of the information providing system 100 according to one embodiment. Meanwhile, processes from Step S101 to Step S104 below may be performed in different order. Further, some of the processes from Step S101 to Step S104 below may be omitted.

### 4-1-1. Acquisition control process

Firstly, the information providing system 100 performs the acquisition control process (Step S101). For example, the information providing system 100 acquires, from the operator terminal 20, the request information that is generated by the customer C by performing processes from Step S201 to Step S204 (to be described later).

### 4-1-2. Extraction control process

Secondly, the information providing system 100 performs the extraction control process (Step S102). For example, the information providing system 100 extracts the candidate products for the product P that conforms to the request information by performing processes from Step S301 to Step S305 (to be described later).

### 4-1-3. Calculation control process

Thirdly, the information providing system 100 performs the calculation control process (Step S103). For example, the information providing system 100 calculates the conformity degrees of the candidate products for the product P by performing processes from Step S401 to Step S404 (to be described later).

### 4-1-4. Provision control process

Fourthly, the information providing system 100 performs the provision control process (Step S104), and terminates the process. For example, the information providing system 100 displays the candidate products on the operator terminal 20 by performing processes from Step S501 to Step S506 (to be described later).

### 4-2. Acquisition control process

The flow of the acquisition control process of the information providing system 100 according to one embodiment will be described below with reference to FIG. 17. FIG. 17 is a flowchart illustrating an example of the flow of the acquisition control process of the information providing system 100 according to one embodiment. Meanwhile, the processes from Step S201 to Step S204 below may be performed in different order. Further, some of the processes from Step S201 to Step S204 may be omitted.

### 4-2-1. Request information generation process

Firstly, the customer C performs a request information generation process (Step S201). For example, the customer C inputs a product type and a requested specification in accordance with each of formats of an application for generating a request for quotation by using a customer terminal used by the customer C, and generates digital data of the request for quotation as request information. Further, the operator terminal 20 receives the request information transmitted from the customer terminal.

### 4-2-2. Request information transmission process

Secondly, the operator terminal 20 performs a request information transmission process (Step S202). For example, the operator terminal 20 transmits the request information that is received from the customer terminal to the providing server 10.

### 4-2-3. Request information acquisition process

Thirdly, the providing server 10 performs a request information acquisition process (Step S203). For example, the providing server 10 acquires the request information that is transmitted from the operator terminal 20.

### 4-2-4. Request information storage process

Fourthly, the providing server 10 performs a request information storage process (Step S204), and terminates the acquisition control process. For example, the providing server 10 stores the request information that is acquired from the operator terminal 20 in the request information storage unit 14b.

### 4-3. Extraction control process

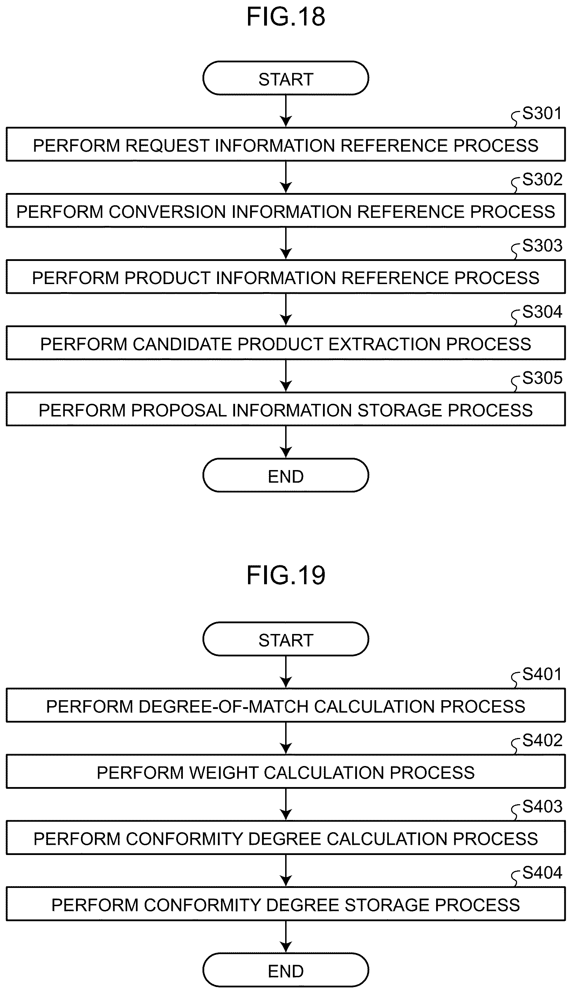

The flow of the extraction control process of the information providing system 100 according to one embodiment will be described with reference to FIG. 18. FIG. 18 is a flowchart illustrating an example of the flow of the extraction control process of the information providing system 100 according to one embodiment. Meanwhile, the processes from Step S301 to Step S305 below may be performed in different order. Further, some of the processes from Step S301 to Step S305 below may be omitted.

### 4-3-1. Request information reference process

Firstly, the providing server 10 performs a request information reference process (Step S301). For example, the providing server 10 refers to the request information that is stored in the request information storage unit 14b. In this case, the providing server 10 refers to, as the request information, the customer ID, the product type, the request format ID, the requested specification, and the like.

### 4-3-2. Conversion information reference process

Secondly, the providing server 10 performs a conversion information reference process (Step S302). For example, the providing server 10 refers to the conversion information that is stored in the conversion information storage unit 14c. In this case, the providing server 10 refers to the conversion information corresponding to the product type, identifies the product specification with the matched request format ID and the matched requested specification, and identifies the product specification ID and the product ID corresponding to the identified product specification.

### 4-3-3. Product information reference process

Thirdly, the providing server 10 performs a product information reference process (Step S303). For example, the providing server 10 refers to the product information that is stored in the product information storage unit 14a. In this case, the providing server 10 identifies the product P that matches at least one of the product specification ID and the product ID corresponding to the identified product specification.

### 4-3-4. Candidate product extraction process

Fourthly, the providing server 10 performs a candidate product extraction process (Step S304). For example, the providing server 10 extracts the identified product P as a candidate product. In this case, the providing server 10 extracts the product ID of the identified candidate product and the product specification included in the product information.

### 4-3-5. Proposal information storage process

Fifthly, the providing server 10 performs a proposal information storage process (Step S305), and terminates the extraction control process. For example, the providing server 10 stores the extracted product ID, the extracted product specification, and proposal information that includes the customer ID, the product type, the request format ID, the requested specification, and the like in the proposal information storage unit 14e.

### 4-4. Calculation control process

The flow of the calculation control process of the information providing system 100 according to one embodiment will be described with reference to FIG. 19. FIG. 19 is a flowchart illustrating an example of the flow of the calculation control process of the information providing system 100 according to one embodiment. Meanwhile, the processes from Step S401 to Step S404 below may be performed in different order. Further, some of the processes from Step S401 to Step S404 below may be omitted.

### 4-4-1. Degree-of-match calculation process

Firstly, the providing server 10 performs a degree-of-match calculation process (Step S401). For example, the providing server 10 refers to the request information and the product information, and calculates the degree of match indicating a ratio of matched specification items in the requested specification and the product specification for each of the candidate products.

### 4-4-2. Weight calculation process

Secondly, the providing server 10 performs a weight calculation process (Step S402). For example, the providing server 10 refers to the weight information that is stored in the weight information storage unit 14d, and calculates the weight by adding weight values of the matched specification items.

### 4-4-3. Conformity degree calculation process

Thirdly, the providing server 10 performs a conformity degree calculation process (Step S403). For example, the providing server 10 calculates the conformity degree by adding the calculated degree of match and the calculated weight.

### 4-4-4. Conformity degree storage process

Fourthly, the providing server 10 performs a conformity degree storage process (Step S404), and terminates the calculation control process. For example, the providing server 10 stores the calculated conformity degree in the proposal information storage unit 14e.

### 4-5. Provision control process

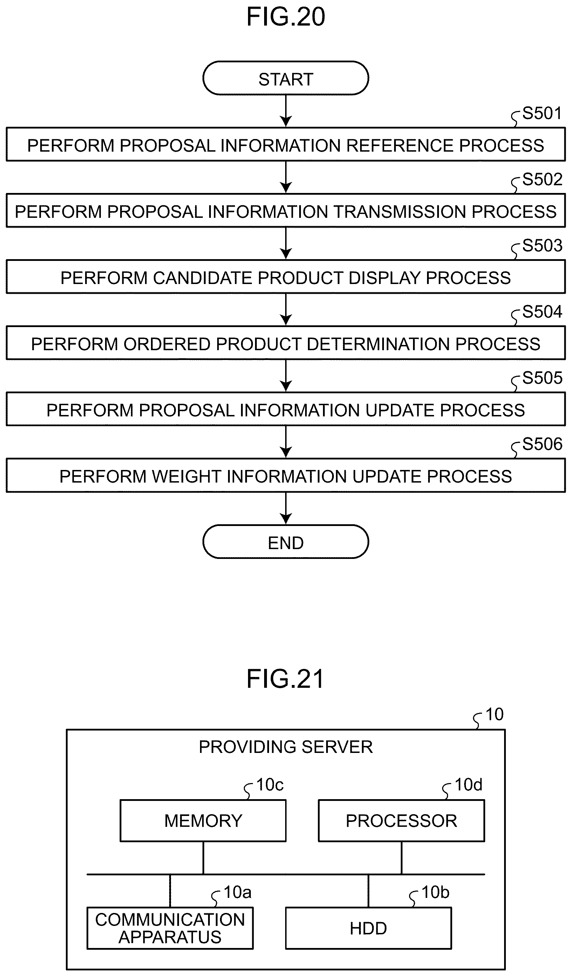

The flow of the provision control process of the information providing system 100 according to one embodiment will be described with reference to FIG. 20. FIG. 20 is a flowchart illustrating an example of the flow of the provision control process of the information providing system 100 according to one embodiment. Meanwhile, the processes from Step S501 to Step S506 below may be performed in different order. Further, some of the processes from Step S501 to Step S506 below may be omitted.

### 4-5-1. Proposal information reference process

Firstly, the providing server 10 performs a proposal information reference process (Step S501). For example, the providing server 10 refers to the candidate products that are stored in the proposal information storage unit 14e.

### 4-5-2. Proposal information transmission process

Secondly, the providing server 10 performs a proposal information transmission process (Step S502). For example, the providing server 10 transmits, to the operator terminal 20, the proposal information including the candidate products that are referred to.

### 4-5-3. Candidate product display process

Thirdly, the operator terminal 20 performs a candidate product display process (Step S503). For example, the operator terminal 20 displays, as the candidate product display screen, the candidate products indicated by the proposal information that is transmitted from the providing server 10. Further, the operator terminal 20 proposes the candidate products to the customer C via the customer terminal.

### 4-5-4. Ordered product determination process

Fourthly, the operator terminal 20 performs an ordered product determination process (Step S504). For example, the operator terminal 20 receives, as the order information, the product P that is ordered by the customer C among the candidate products proposed to the customer C, via the customer terminal. Further, the operator terminal 20 transmits the order information that is received from the customer terminal to the providing server 10.

### 4-5-5. Proposal information update process

Fifthly, the providing server 10 performs a proposal information update process (Step S505). For example, the providing server 10 stores the order information that is acquired from the operator terminal 20 in the proposal information storage unit 14e and updates the proposal information.

### 4-5-6. Weight information update process

Sixthly, the providing server 10 performs a weight information update process (Step S506), and terminates the provision control process. For example, the providing server 10 calculates the weight value of the customer C based on the providing information including the latest request information and the latest order information, stores the weight value in the weight information storage unit 14d, and updates the weight information.

### 5. Effects of embodiments

Effects of one embodiment will be described. In the following, first to tenth effects corresponding to the processes according to one embodiment will be described.

### 5-1. First effect

Firstly, in one embodiment, the providing server 10 stores therein the product information indicating each of the specification items of each of the products P, acquires the request information indicating each of the specification items of a product requested by the customer C, extracts the candidate products to be proposed to the customer C from among all of the products P included in the product information based on the acquired request information, calculates the conformity degree with the request information for each of the extracted candidate products, and provides the proposal information indicating the candidate products based on the calculated conformity degree. Therefore, in one embodiment, it is possible to propose the candidate products that conform to the request of the customer C, so that it is possible to optimize a proposal for the product P to be provided to the customer C.

### 5-2. Second effect

Secondly, in one embodiment, the providing server 10 stores therein the conversion information including the product identification information on each of the products P corresponding to the product specifications of the product P, identifies the product identification information that conforms to the request information by using the conversion information, and extracts the candidate products from among all of the products P included in the product information by using the identified product identification information. Therefore, in one embodiment, it is possible to use the conversion information that allows conversion from the request information to the product information, so that it is possible to optimize a proposal for the product P to be provided to the customer C.

### 5-3. Third effect

Thirdly, in one embodiment, the providing server 10 stores therein, as the product identification information, the product ID of each of the products P or the product specification ID of each of the products P corresponding to the product specification of the product P, and the conversion information including the request format ID of each of the different formats of the request information, acquires the request information generated in each of the formats, and identifies the product ID of each of the products P or the product specification ID of each of the products P that conforms to the request information by using the request format ID and the conversion information. Therefore, in one embodiment, it is possible to use the conversion information that allows conversion from the request information to the product information and that takes into account the format of a request for quotation, so that it is possible to optimize a proposal for the product P to be provided to the customer C.

### 5-4. Fourth effect

Fourthly, in one embodiment, the providing server 10 stores therein the product information that is classified for each of the product types, extracts the candidate products from among all of the products classified by the product types, and calculates, as the conformity degree, the degree of match between the requested specification indicated by the request information and the product specification of the candidate products indicated by the product information. Therefore, in one embodiment, it is possible to quantitatively analyze the conformity degree with the request of the customer C for each of the candidate products, so that it is possible to optimize a proposal for the product P to be provided to the customer C.

### 5-5. Fifth effect

Fifthly, in one embodiment, the providing server 10 displays the proposal information in which the candidate products are sorted in certain order corresponding to the degree of match. Therefore, in one embodiment, it is possible to preferentially provides the product P that conforms to the request of the customer C to the operator O, so that it is possible to optimize a proposal for the product P to be provided to the customer C.

### 5-6. Sixth effect

Sixthly, in one embodiment, the providing server 10 displays the proposal information in which characters or an area of the matched product specification among the product specifications of each of the products P is colored. Therefore, in one embodiment, it is possible to clarify and provide the product specification that conforms to the request of the customer C to the operator O, so that it is possible to optimize a proposal for the product P to be provided to the customer C.

### 5-7. Seventh effect

Seventhly, in one embodiment, the providing server 10 stores therein the weight information indicating importance of the requested specification of the product P for each of the customers C, and calculates the conformity degree based on the weight information. Therefore, in one embodiment, it is possible to calculate the conformity degree while taking into account the importance of the request of the customer C, so that it is possible to optimize a proposal for the product P to be provided to the customer C.

### 5-8. Eighth effect

Eighthly, in one embodiment, the providing server 10 updates the weight information based on the user information on the customer C. Therefore, in one embodiment, it is possible to calculate the conformity degree while taking into account the importance of the request of the customer C in accordance with the user information on the customer C, so that it is possible to optimize a proposal for the product P to be provided to the customer C.

### 5-9. Ninth effect

Ninthly, in one embodiment, the providing server 10 updates the weight information based on, as the user information, at least one of the request information, order information on a product that is ordered by the customer C from among the candidate products, and industry information on an industry to which the customer C belongs. Therefore, in one embodiment, it is possible to calculate the conformity degree while taking into account the importance of the request of the customer C in accordance with the request information, the order information, and the industry information on the customer C, so that it is possible to optimize a proposal for the product P to be provided to the customer C.

### 5-10. Tenth effect

Tenthly, in one embodiment, the product P is a field device that is installed in a plant. Therefore, in one embodiment, it is possible to propose the candidate products for a field device that conforms to the request of the customer C who is a plant administrator, so that it is possible to optimize a proposal for the product P to be provided to the customer C.

### 6. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### 7. Hardware

A hardware configuration example of the providing server 10 will be described below with reference to FIG. 21. Meanwhile, the other apparatuses may have the same hardware configurations. FIG. 21 is a diagram illustrating a hardware configuration example according to one embodiment. As illustrated in FIG. 21, the providing server 10 includes a communication apparatus 10a, a Hard Disk Drive (HDD) 10b, a memory 10c, and a processor 10d. Further, all of the units illustrated in FIG. 21 are connected to one another via a bus or the like.

The communication apparatus 10a is implemented by a network interface card or the like, and performs communication with a different server. The HDD 10b stores therein a program or a database for implementing the functions as illustrated in FIG. 2.

The processor 10d reads, from the HDD 10b or the like, a program that executes the same processes as those of each of the processing units illustrated in FIG. 2, loads the program onto the memory 10c, and executes the processes that implement each of the functions illustrated in FIG. 2. For example, the processes implement the same functions as those of each of the processing units that are included in the providing server 10. Specifically, the processor 10d reads, from the HDD 10b or the like, a program that has the same functions as those of the acquisition unit 15a, the extraction unit 15b, the calculation unit 15c, the providing unit 15d, and the like. Further, the processor 10d executes a process for implementing the same processes as those of the acquisition unit 15a, the extraction unit 15b, the calculation unit 15c, the providing unit 15d, and the like.

As described above, the providing server 10 operates as an apparatus that reads and executes the program according to one embodiment to implement various kinds of processing methods. Further, the providing server 10 is able to implement the same functions as those of the embodiments as described above by causing a medium reader to read the above-described program from a recording medium and executing the above-described read program. Meanwhile, the program described in one embodiment need not always be executed by the providing server 10. For example, the present invention may be applied in the same manner even when a different computer or a different server apparatus executes the above-described program or the different computer and the different server apparatus execute the above-described program in a cooperative manner.

The program according to one embodiment may be distributed via a network, such as the Internet. Further, the program may be recorded in a computer readable recording medium, such as a hard disk, a flexible disk (FD), a compact disc (CD)-ROM, a MagnetoOptical disk (MO), or a Digital Versatile Disk (DVD), and may be executed by being read from the recording medium by a computer.

According to one aspect of the present disclosure, it is possible to optimize a proposal for a product to be provided to a user.

## Claims

1. A providing apparatus (10) comprising:
a memory; and
a processor that is connected to the memory, wherein
the memory stores therein product information indicating each of specification items of each of products, and
the processor
acquires request information indicating each of specification items of a product requested by a user,
extracts candidate products to be proposed to the user from among all of the products included in the product information based on the acquired request information,
calculates a conformity degree with the request information for each of the extracted candidate products, and
provides proposal information indicating the candidate products based on the calculated conformity degree.

2. The providing apparatus (10) according to claim 1, wherein
the memory stores therein conversion information including product identification information on each of the products corresponding to each of product specification items of the product, and
the processor
identifies the product identification information that conforms to the request information by using the conversion information, and
extracts the candidate products from among all of the products included in the product information by using the identified product identification information.

3. The providing apparatus (10) according to claim 2, wherein
the memory stores therein the product identification information that includes at least one of identification information on each of the products corresponding to each of the specification items of the product and identification information on each of the specification items of each of the products, and the conversion information including identification information on each of different formats of the request information, and
the processor
acquires the request information generated in each of the formats, and
identifies identification information on each of the products or identification information on each of specification items of each of the products that conform to the request information by using identification information on each of the formats and the conversion information.

4. The providing apparatus (10) according to any one of claims 1 to 3, wherein
the memory stores therein the product information that is classified for each of product types, and
the processor
extracts the candidate products from among all of the products classified by the product types, and
calculates, as the conformity degree, a degree of match between each of the specification items of the product indicated by the request information and each of specification items of the candidate products indicated by the product information.

5. The providing apparatus (10) according to claim 4, wherein the processor displays proposal information in which the candidate products are sorted in certain order corresponding to the degree of match.

6. The providing apparatus (10) according to claim 4 or 5, wherein the processor displays the proposal information indicating the candidate product for which characters or an area of a matched specification item among the specification items of each of the products is colored.

7. The providing apparatus (10) according to any one of claims 1 to 6, wherein
the memory stores therein weight information indicating importance of each of specification items of the product for each of the users, and
the processor calculates the conformity degree based on the weight information.

8. The providing apparatus (10) according to claim 7, wherein the processor updates the weight information based on user information on the user.

9. The providing apparatus (10) according to claim 8, wherein the processor updates the weight information based on, as the user information, at least one of the request information, order information on a product that is ordered by the user from among the candidate products, and industry information on an industry to which the user belongs.

10. The providing apparatus (10) according to any one of claims 1 to 9, wherein the product is a field device that is installed in a plant.

11. A providing method implemented by a computer (10), the providing method comprising:
acquiring request information indicating each of specification items of a product requested by a user;
extracting candidate products to be proposed to the user from among all of the products included in product information indicating each of specification items of each of products, based on the acquired request information;
calculating a conformity degree with the request information for each of the extracted candidate products; and
providing proposal information indicating the candidate products based on the calculated conformity degree.

12. A providing program that causes a computer (10) to execute a process, the process comprising:
acquiring request information indicating each of specification items of a product requested by a user;
extracting candidate products to be proposed to the user from among all of the products included in product information indicating each of specification items of each of products, based on the acquired request information;
calculating a conformity degree with the request information for each of the extracted candidate products; and
providing proposal information indicating the candidate products based on the calculated conformity degree.

13. A providing apparatus (10) comprising:
a memory; and
a processor that is connected to the memory, wherein
the memory stores therein product information indicating each of specification items of each of products,
the processor
acquires request information indicating each of specification items of a product requested by a user, and
extracts candidate products to be proposed to the user from among all of the products included in the product information based on the acquired request information,
the memory stores therein conversion information including product identification information on each of the products corresponding to each of specification items of the product, and
the processor
identifies the product identification information that conforms to the request information by using the conversion information, and
extracts the candidate products from among all of the products included in the product information by using the identified product identification information.
